(19) Europäisches Patentamt
European Patent Office
Office européen des brevets

(11) **EP 2 759 561 A1**

(12) **EUROPEAN PATENT APPLICATION**

(43) Date of publication:
**30.07.2014 Bulletin 2014/31**

(51) Int Cl.:
**C08G 63/81** (2006.01)   **C08G 63/90** (2006.01)
**C08G 63/08** (2006.01)

(21) Application number: **14152556.8**

(22) Date of filing: **24.01.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **28.01.2013 JP 2013013765**

(71) Applicant: **Ricoh Company, Ltd.**
**Tokyo 143-8555 (JP)**

(72) Inventors:
• **Nemoto, Taichi**
  **Japan, 143-8555 (JP)**

• **Tanaka, Chiaki**
  **Japan, 143-8555 (JP)**
• **Izumi, Satoshi**
  **Japan, 143-8555 (JP)**
• **Arai, Yoko**
  **japan, 143-8555 (JP)**
• **Kamada, Yasuo**
  **japan, 143-8555 (JP)**
• **Morita, Tatsuya**
  **Japan, 143-8555 (JP)**

(74) Representative: **Lamb, Martin John Carstairs**
**Marks & Clerk LLP**
**90 Long Acre**
**London**
**WC2E 9RA (GB)**

(54)   **Method for producing polymer, and polymer product**

(57)   To provide a method for producing a polymer, which contains: bringing an intermediate polymer, which has been obtained through ring-opening polymerization of a ring-opening polymerizable monomer, into contact with, and melting the intermediate polymer in a compressive fluid having a density of 230 kg/m$^3$ or greater, at temperature lower than a melting point of the intermediate polymer, at a ratio of 0.05 to 10, to dissolve a low-molecular-weight compound contained in the intermediate polymer in the compressive fluid, to thereby extract the low-molecular-weight compound, wherein the ratio is a ratio of a mass of the intermediate polymer to a mass of the compressive fluid.

FIG. 3

EP 2 759 561 A1

**Description**

BACKGROUND OF THE INVENTION

Field of the Invention

The present invention relates to a method for producing a polymer, and a polymer product.

Description of the Related Art

Conventionally known methods for producing polymers involve ring-opening polymerization of a ring-opening polymerizable monomer. For example, disclosed is a method for producing polylactic acid by allowing a ring-opening polymerizable monomer and lactide to react for polymerization in a melted state (see Japanese Patent Application Laid-Open (JP-A) No. 08-259676). In accordance with the disclosed method, lactide is reacted in a melted state to polymerize using tin octylate as a metal catalyst and setting the reaction temperature to 195°C.

In the case where polylactic acid is produced in this method, however, more than 2% by weight of lactide remains in a produced polymer product (see JP-A No. 08-259676). This is because an equilibrium relationship between the ring-opening polymerizable monomer and a polymer is established in a reaction system of ring-opening polymerization of polylactic acid or the like, and therefore a ring-opening polymerizable monomer tends to be generated by a depolymerization reaction, which is a reverse reaction of a ring-opening polymerization reaction, when it is polymerized at high temperature. The residual lactide (ring-opening polymerizable monomer residue) acts as a catalyst for hydrolysis of the generated polymer product, or may impair thermal resistance of the polymer product.

Moreover, the compound, which functions as a polymerization catalyst, also functions as a depolymerization catalyst. Therefore, it is not preferred that such compound be remained in the polymer obtained after the polymerization reaction. It has been widely known about the catalyst that depolymerization is inhibited by adding additives called a quencher, such as a phosphoric acid compound. In the case where a tin-based catalyst is used, for example, it is preferred that such catalyst be completely removed, as tin itself is not preferable in view of safety to living matter.

As for a method for removing a low-molecular-weight compound, such as monomer residues or catalyst residues, from a polymer, known is a method for re-depositing polymer using an organic solvent. In this method, the low-molecular-weight compound can be removed, but it is not economically preferable as a step for removing the organic solvent needs to be further provided, and it is difficult to completely remove the organic solvent from the polymer (particularly, the polymer having a high molecular weight. Accordingly, there has been a need for a method for removing a low-molecular-weight component from a polymer without using a large amount of an organic solvent.

Proposed is a method for extracting a low-molecular-weight compound from polymer using supercritical carbon dioxide as a solvent. For example, disclosed is a method where a low-molecular-weight compound is extracted from a polymer in a solid state (a pellet) in supercritical carbon dioxide (see JP-A No. 2005-132958). In this method, however, it takes a time to extract. Therefore, it is clear that this method is not an efficient removal method.

Moreover, disclosed is a method where a polymer is liquidized (a melted state) at temperature equal to or higher than a melting point of the polymer, and a low-molecular-weight compound is extracted from the liquidized polymer in supercritical carbon dioxide (see JP-A No. 2006-276573). In this method, however, a depolymerization reaction is also carried out in the melted state of the polymer, to thereby generate a large amount of monomer residues. Therefore, this method is also not an effective removal method.

Disclosed is a method for extracting polylactic acid, a monomer, or a catalyst using supercritical carbon dioxide as a solvent (see S. Y. et al. Green Chem. 2012, 14(5), 1357-1366). In this method, however, removal of the low-molecular-weight compound is performed using an extremely large amount of supercritical carbon dioxide, which is 750 times the amount of the polymer from which the low-molecular-weight compound is removed. Therefore, this method is not efficient.

SUMMARY OF THE INVENTION

The present invention aims to solve the aforementioned various problems in the art and to achieve the following object. Namely, the object of the present invention is to provide a method for producing a polymer, which can produce a polymer without using a large amount of an organic solvent, and reduce an amount of a low-molecular-weight compound in the polymer, such as monomer residues or a catalyst.

The means for solving the aforementioned problems are as follows:

The method for producing a polymer according to the present invention contains:

bringing an intermediate polymer, which has been obtained through ring-opening polymerization of a ring-opening polymerizable monomer, into contact with, and melting the intermediate polymer in a compressive fluid having a density of 230 kg/m$^3$ or greater, at temperature lower than a melting point of the intermediate polymer, at a ratio of 0.05 to 10, to dissolve a low-molecular-weight compound contained in the intermediate polymer in the compressive fluid, to thereby extract the low-molecular-weight compound,

wherein the ratio is a ratio of a mass of the intermediate polymer to a mass of the compressive fluid.

The present invention can solve the aforementioned various problems in the art, achieve the aforementioned object, and provide a method for producing a polymer, which can produce a polymer without using a large amount of an organic solvent, and reduce an amount of a low-molecular-weight compound in the polymer, such as monomer residues or a catalyst.

BRIEF DESCRIPTION OF THE DRAWINGS

FIG. 1 is a general phase diagram depicting the state of a substance depending on pressure and temperature.
FIG. 2 is a phase diagram which defines a range of a compressive fluid in the present embodiment.
FIG. 3 is a system diagram illustrating one example of a polymerization step of a continuous system.
FIG. 4 is a system diagram illustrating one example of a polymerization step of a continuous system.
FIG. 5 is a system diagram illustrating one example of a polymerization step of a batch system.
FIG. 6A is a schematic diagram illustrating one example of a complex production system using a continuous system.
FIG. 6B is a schematic diagram illustrating one example of a complex production system using a continuous system.
FIG. 7 is a schematic diagram illustrating one example of a complex production system using a continuous system.

DETAILED DESCRIPTION OF THE INVENTION

(Method for Producing Polymer)

The method for producing a polymer according to the present invention contains at least an extraction step, preferably further contains a polymerization step, and may further contain appropriately selected other step according to the necessity.
The extraction step may be performed in a batch system or a continuous system.

<Extraction Step (Batch System)>

In the case where the extraction step employs a batch system, the extraction step is bringing an intermediate polymer, which has been obtained through ring-opening polymerization of a ring-opening polymerizable monomer, into contact with, and melting the intermediate polymer in a compressive fluid having a density of 230 kg/m$^3$ or greater at temperature lower than a melting point of the intermediate polymer at a ratio of 0.05 to 10, to dissolve a low-molecular-weight compound contained in the intermediate polymer in the compressive fluid, to thereby extract the low-molecular-weight compound, wherein the ratio is a ratio of a mass of the intermediate polymer to a mass of the compressive fluid.
The number of the extraction step performed is appropriately selected depending on the intended purpose without any limitation, provided that the ratio (a mass of the intermediate polymer/a mass of the compressive fluid) of the intermediate polymer to the compressive fluid is within the range of 0.05 to 10. The number thereof is preferably a few times. Specifically, the number of the extraction step performed is more preferably three times or more.

<Extraction Step (Continuous System)>

In the case where the extraction step employs a continuous system, the extraction step is continuously bringing an intermediate polymer, which has been obtained through ring-opening polymerization of a ring-opening polymerizable monomer, into contact with, and continuously melting the intermediate polymer in a compressive fluid having a density of 230 kg/m$^3$ or greater at temperature lower than a melting point of the intermediate polymer at a ratio of 0.05 to 10, to dissolve a low-molecular-weight compound contained in the intermediate polymer in the compressive fluid, to thereby extract the low-molecular-weight compound, wherein the ratio is a ratio of a mass of the intermediate polymer to a mass of the compressive fluid.
The extraction step is appropriately selected depending on the intended purpose without any limitation, provided that the ratio (a mass of the intermediate polymer/a mass of the compressive fluid) of the intermediate polymer to the compressive fluid is within the range of 0.05 to 10. It is preferred that the extraction step be performed by continuously supplying and discharging the compressive fluid with maintaining the pressure constant.

In either where the extraction step is the batch system or a continuous system, the low-molecular-weight compound contained in the intermediate polymer is separated together with the compressive fluid in the extraction step, to thereby obtain a polymer (polymer product) from which the low-molecular-weight compound has been removed.

-Intermediate Polymer -

The intermediate polymer is appropriately selected depending on the intended purpose without any limitation, provided that it is a polymer obtained through ring-opening polymerization of the ring-opening polymerizable monomer. Examples thereof include a conventional polymer product, and a polymer product obtained through a conventional polymerization method (e.g., solution polymerization, and melt polymerization).

The intermediate polymer contains a low-molecular-weight compound, which is not preferably remained in the polymer product.

An amount of the low-molecular-weight compound in the intermediate polymer is appropriately selected depending on the intended purpose without any limitation, but it is preferably 10,000 ppm by mass or less, more preferably 5,000 ppm by mass or less, even more preferably 2,500 ppm by mass or less, and particularly preferably 1,000 ppm by mass or less.

The amount thereof being 10,000 ppm by mass or less is preferable because the low-molecular-weight compound can be efficiently extracted in the extraction step, and a polymer product whose low-molecular-weight compound content is sufficiently reduced (for example, an amount of the ring-opening polymerizable monomer residues is less than 100 ppm by mass) is suitably contained.

-Low-molecular-weight compound-

The low-molecular-weight compound is a low-molecular-weight compound (compound having a molecular weight of 1,000 or smaller) other than a target product (polymer), which is contained in the intermediate polymer.

The low-molecular-weight compound is appropriately selected depending on the intended purpose without any limitation, but it is a component contained in the intermediate polymer as a raw material, or a by-product originated from such component. Examples of the low-molecular-weight compound include the ring-opening polymerizable monomer (ring-opening polymerizable monomer as a monomer residue), a catalyst (catalyst residue), an initiator, additives, and an oligomer generated by bonding a small number of the ring-opening polymerizable monomers to each other (e.g., dimmer, trimer, and tetramer).

Among them, the low-molecular-weight compound is preferably the ring-opening polymerizable monomer, or the catalyst, or the both thereof. The ring-opening polymerizable monomer is preferable, as a polymer whose properties have been improved by reducing the monomer residues to prevent degradation in polymer strength or thermal resistance, can be obtained. Moreover, the catalyst is preferable, as a polymer whose depolymerization activity or adverse influence to living matter has been reduced is obtained by reducing the catalyst residues.

--Ring-Opening Polymerizable Monomer-

The ring-opening polymerizable monomer is appropriately selected depending on the intended purpose without any limitation, and examples thereof include cyclic ester, and cyclic carbonate.

--Catalyst--

The catalyst is appropriately selected depending on the intended purpose without any limitation, and examples thereof include an organic catalyst, and a metal catalyst.

-Compressive Fluid-

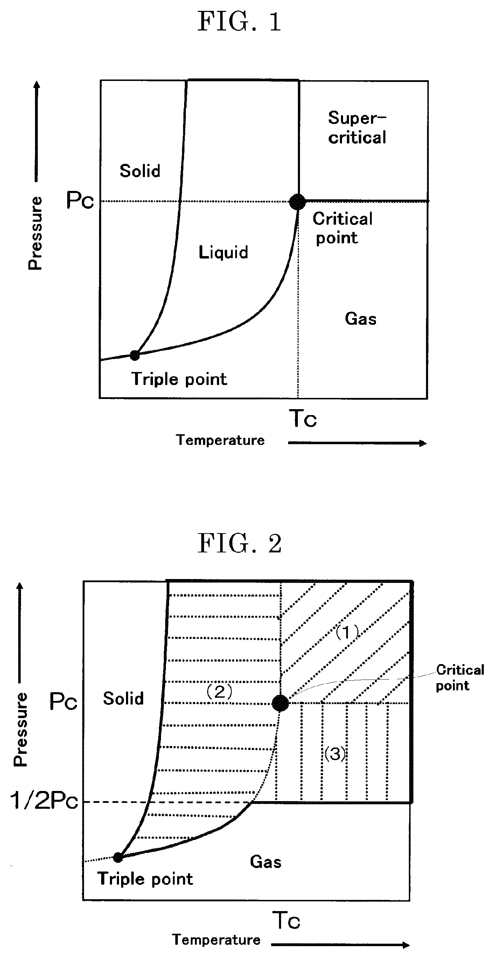

The compressive fluid is explained through FIGs. 1 and 2. FIG. 1 is a phase diagram depicting a state of a substance depending on temperature and pressure. FIG. 2 is a phase diagram, which defines a range of the compressive fluid.

The "compressive fluid" is a fluid, which is in a state that is in any of the regions (1), (2), and (3) of FIG. 2 in the phase diagram of FIG. 1.

In such regions, the substance is known to have extremely high density and show different behaviors from those shown at normal temperature and normal pressure. Note that, a substance is a supercritical fluid when it is in the region (1). The supercritical fluid is a fluid that exists as a noncondensable high-density fluid at temperature and pressure exceeding the corresponding critical points, which are limiting points at which a gas and a liquid can coexist. When a substance is in the region (2), the substance is a liquid, but in the present embodiment, it is a liquefied gas obtained by compressing a substance existing as a gas at normal temperature (25°C) and ambient pressure (1 atm). When a substance is in the region (3), the substance is in the state of a gas, but in the present invention, it is a high-pressure gas whose pressure is 1/2 or higher than the critical pressure (Pc), i.e. 1/2Pc or higher.

Examples of a substance for constituting the compressive fluid include carbon monoxide, carbon dioxide, dinitrogen oxide, nitrogen, methane, ethane, propane, 2,3-dimethylbutane, and ethylene. Among them, carbon dioxide is preferable because the critical pressure and critical temperature of carbon dioxide are respectively about 7.4 MPa, and about 31°C, and thus a supercritical state of carbon dioxide is easily formed. In addition, carbon dioxide is non-flammable, and therefore it is easily handled. These compressive fluids may be used alone, or in combination.

A density of the compressive fluid is appropriately selected depending on the intended purpose without any limitation, provided that it is 230 kg/m$^3$ or greater, but the density thereof is preferably 230 kg/m$^3$ to 900 kg/m$^3$, more preferably 400 kg/m$^3$ to 900 kg/m$^3$, and even more preferably 500 kg/m$^3$ to 700 kg/m$^3$.

When the density of the compressive fluid is in the range of 500 kg/m$^3$ to 700 kg/m$^3$, the compressive fluid is turned into a supercritical state, and the low-molecular-weight compound can be efficiently extracted. Therefore, use of the compressive fluid having the aforementioned density is effective.

The temperature for melting the intermediate polymer is appropriately selected depending on the intended purpose without any limitation, provided that it is temperature lower than a melting point of the intermediate polymer. The upper limit of the temperature is preferably temperature lower than the melting point by 10°C, more preferably temperature lower than the melting point by 30°C.

The lower limit of the temperature for melting the intermediate polymer is appropriately selected depending on the intended purpose without any limitation, provided that the intermediate polymer is melted at the temperature, but it is preferably temperature lower than the melting point by 150°C, more preferably temperature lower than the melting point by 100°C.

The phrase "melting the intermediate polymer" means a state where the intermediate polymer is plasticized or liquidized with swelling as a result of the contact with the compressive fluid. The state that the intermediate polymer is melted can be observed by using a cell equipped with a pressure resistant window.

Moreover, the phrase "dissolving the low-molecular-weight compound" means that the low-molecular-weight compound is dissolved in the compressive fluid. The state that the low-molecular-weight compound is dissolved can be confirmed with a change in a mass of the low-molecular-weight compound.

A ratio (a mass of the intermediate polymer/a mass of the compressive fluid) of the intermediate polymer to the compressive fluid is appropriately selected depending on the intended purpose without any limitation, provided that the ratio is 0.05 to 10. The ratio thereof is preferably 0.5 to 5.0, more preferably 1.0 to 3.0. When the blending ratio is less than 0.05, an amount of the compressive fluid used increases, and therefore it is not economical. When the blending ratio is in the range of 1.0 to 3.0. on the other hand, the intermediate polymer and the compressive fluid are homogeneously blended to sufficiently plasticize the intermediate polymer to create a melted state, and therefore the low-molecular-weight compound can be efficiently extracted.

Note that, in the case where extraction is performed without taking the intermediate polymer, which has been generated in the supercritical polymerization step, out from the polymerization reaction device, the blending ratio is determined as a value (a mass of the raw materials/a mass of the compressive fluid) obtained replacing a mass of the intermediate polymer with a mass of the raw materials in the blending ratio (a mass of the intermediate polymer/a mass of the compressive fluid).

The extraction step is preferably performed in the presence of the entrainer.

It has been known that a function of supercritical carbon dioxide as a medium significantly changes, as a minor component, such as water and alcohol, is added to supercritical carbon dioxide. This is called an entrainer effect, and the micro component is called an entrainer.

The entrainer usable in the extraction step is appropriately selected depending on a type of the low-molecular-weight compound to be removed, without any limitation, and examples thereof include alcohol (e.g., ethanol, isopropyl alcohol, and dimethyl ether). Among them, ethanol is preferable, as ethanol is easily turned into a supercritical state, and is relatively stable. In the present invention, water is not preferable, as it may decompose a polymer.

A mass ratio of the entrainer to the compressive fluid is appropriately selected depending on the intended purpose without any limitation, but it is preferably 5 parts by mass to 100 parts by mass, more preferably 10 parts by mass to 50 parts by mass, relative to 100 parts by mass of the compressive fluid.

<Polymerization Step>

The method for producing a polymer according to the present invention may further contain a polymerization step in addition to the extraction step, and may produce the intermediate polymer through the polymerization step.

The polymerization step is appropriately selected depending on the intended purpose without any limitation, and examples thereof include conventional polymerization methods, such as a solution polymerization method using an organic solvent, and a melt polymerization method where a reaction is performed at temperature equal to or higher than a melting point of a polymer to be generated.

The solution polymerization method is a method for ring-opening polymerizing the ring-opening polymerizable monomer in a solvent (e.g., a halogen solvent, such as dichloromethane, chloroform, and methylene chloride, and tetrahydrofuran).

The melt polymerization method is a method, in which the ring-opening polymerizable monomer is melted, and polymerized through ring-opening polymerization.

<Polymerization Step (Supercritical Polymerization Step)>

Moreover, the polymerization step is a step containing bringing raw materials including the ring-opening polymerizable monomer into contact with the compressive fluid to polymerize the ring-opening polymerizable monomer through ring-opening polymerization to thereby obtain an intermediate polymer (may also referred to as a "supercritical polymerization step" or a "supercritical polymerization method" hereinafter).

The polymerization step may be performed in a continuous system or a batch system.

An intermediate polymer, in which an amount of the low-molecular-weight compound is 10,000 ppm by mass or less, is suitably generated by the polymerization step. As a result, the low-molecular-weight compound can be efficiently extracted in the following extraction step, and a polymer product whose low-molecular-weight compound content is sufficiently reduced (for example, an amount of the ring-opening polymerizable monomer residues is less than 100 ppm by mass) can be suitably obtained.

-Raw Materials-

First, components, such as a ring-opening polymerizable monomer, which are used in the polymerization step as raw materials, are explained.

In the present invention, the raw materials are materials from which a polymer is produced, and materials that will be constitutional components of a polymer. The raw materials contains at least a ring-opening polymerizable monomer, and may further contain appropriately selected other components, such as an initiator, and additives, according to the necessity.

--Ring-Opening Polymerizable Monomer-

The ring-opening polymerizable monomer is appropriately selected depending on the intended purpose without any limitation, but it is preferably a ring-opening polymerizable monomer containing a carbonyl group in a ring thereof. The carbonyl bond is formed with oxygen, which has high electronegativity, and carbon bonded together with a $\pi$-bond. Because of electrons of the $\pi$-bond, oxygen is negatively polarized, and carbon is positively polarized, and therefore enhances reactivity. In the case where the compressive fluid is carbon dioxide, it is assumed that affinity between carbon dioxide and a generated polymer is high, as the carbonyl bond is similar to the structure of carbon dioxide. As a result of these functions, a plasticizing effect of the generated polymer due to the compressive fluid is enhanced. As for the ring-opening polymerizable monomer containing a carbonyl group in a ring thereof, preferred are a monomer containing an ester bond in a ring thereof (cyclic ester), and a monomer containing a carbonate bond in a ring thereof (cyclic carbonate), and more preferred is a ring-opening polymerizable monomer containing an ester bond.

Examples of the ring-opening polymerizable monomer include cyclic ester and cyclic carbonate.

---Cyclic Ester---

The cyclic ester is appropriately selected depending on the intended purpose without any limitation, but it is preferably a cyclic dimer obtained through dehydration-condensation of an L-form and/or D form of a compound represented by General Formula 1.

R-C*-H(-OH)(-COOH)          General Formula 1

In General Formula 1, R is a C1-C10 alkyl group, and C* represents an asymmetric carbon.

Examples of the compound represented by General Formula 1 include enantiomers of lactic acid, enantiomers of 2-hydroxybutanoic acid, enantiomers of 2-hydroxypentanoic acid, enantiomers of 2-hydroxyhexanoic acid, enantiomers of 2-hydroxyheptanoic acid, enantiomers of 2-hydroxyoctanoic acid, enantiomers of 2-hydroxynonanoic acid, enantiomers of 2-hydroxydecanoic acid, enantiomers of 2-hydroxyundecanoic acid, and enantiomers of 2-hydroxydodecanoic acid. Among them, enantiomers of lactic acid are preferable since they are highly reactive and readily available.

As for the cyclic ester, moreover, there is, for example, aliphatic lactone. Examples of the aliphatic lactone include β-propiolactone, β-butyrolactone, γ-butyrolactone, γ-hexanolactone, γ-octanolactone, δ-valerolactone, δ-hexanolactone, δ-octanolactone, ε-caprolactone, δ-dodecanolactone, α-methyl-γ-butyrolactone, δ-methyl-δ-valerolactone, glycolide and lactide. Among them, ε-caprolactone is particularly preferable since it is highly reactive and readily available.

---Cyclic Carbonate---

The cyclic carbonate is appropriately selected depending on the intended purpose without any limitation, and examples thereof include ethylene carbonate, and propylene carbonate.

These ring-opening polymerizable monomers may be used alone or in combination.

-Other Components-

Examples of the aforementioned other components include an initiator, a catalyst, and additives.

--Initiator --

The initiator is used for controlling a molecular weight of a polymer obtained through ring-opening polymerization.

The initiator is appropriately selected depending on the intended purpose without any limitation. The initiator may be, for example, aliphatic monoalcohol or dialcohol, or polyhydric alcohol, as long as it is alcohol-based, and may be either saturated or unsaturated.

Examples of the initiator include monoalcohol, polyhydric alcohol, and lactic acid ester. Examples of the monoalcohol include methanol, ethanol, propanol, butanol, pentanol, hexanol, heptanol, nonanol, decanol, lauryl alcohol, myristyl alcohol, cetyl alcohol, and stearyl alcohol. Examples of the polyhydric alcohol include dialcohol (e.g., ethylene glycol, 1,2-propanediol, 1,3-propanediol, 1,3-butanediol, 1,4-butanediol, hexanediol, nonanediol, tetramethylene glycol, and polyethylene glycol), glycerol, sorbitol, xylitol, ribitol, erythritol, and triethanol amine. Examples of the lactic acid ester include methyl lactate, and ethyl lactate. These may be used alone or in combination.

Moreover, a polymer having an alcohol residue at a terminal thereof, such as polycaprolactonediol and polytetramethylene glycol, may be used as the initiator. A use of such polymer enables to synthesize diblock copolymers or triblock compolymers.

An amount of the initiator for use in the polymerization step can be appropriately adjusted depending on a target molecular weight, and the amount thereof is preferably 0.1 mol% to 5 mol% relative to 100 mol% of the ring-opening polymerizable monomer. In order to prevent unevenly initiating polymerization, a monomer and the initiator are preferably sufficiently mixed before the monomer is brought into contact with a catalyst.

--Catalyst--

The catalyst is appropriately selected depending on the intended purpose without any limitation, and examples thereof include an organic catalyst, and a metal catalyst.

---Organic Catalyst---

The organic catalyst is appropriately selected depending on the intended purpose without any limitation, and for example, the organic catalyst is a catalyst, which does not contain a metal atom, contributes to a ring-opening polymerization reaction of the ring-opening polymerizable monomer, and can be released and regenerated through a reaction with alcohol after forming an active intermediate product with the ring-opening polymerizable monomer.

In the case where a ring-opening polymerizable monomer containing an ester bond is polymerized, for example, the organic catalyst is preferably a (nucleophilic) compound having basicity and serving as a nucleophilic agent, more preferably a compound containing a nitrogen atom, and more preferably a cyclic compound containing a nitrogen atom. Such compound is appropriately selected depending on the intended purpose without any limitation, and examples thereof include cyclic monoamine, cyclic diamine (e.g., a cyclic diamine compound having an amidine skeleton), a cyclic triamine compound having a guanidine skeleton, a heterocyclic aromatic compound containing a nitrogen atom, N-heterocyclic carbine. Note that, a cationic organic catalyst is used for the ring-opening polymerization reaction, but the cationic organic catalyst takes hydrogen off (back-biting) from a principle chain of a polymer and therefore a molecular weight distribution of a resulting polymer product becomes wide and it is difficult to obtain the polymer product having high molecular weight.

Examples of the cyclic monoamine include quinaclidone.

Examples of the cyclic diamine include 1,4-diazabicyclo[2.2.2]octane (DABCO) and 1,5-diazabicyclo(4,3,0)nonene-5.

Examples of the cyclic diamine compound having a diamine skeleton include 1,8-diazabicyclo[5.4.0]undec-7-ene (DBU) and diazabicyclononene.

Examples of the cyclic triamine compound having a guanidine skeleton include 1,5,7-triazabicyclo[4.4.0]dec-5-ene (TBD) and diphenylguanidine (DPG).

Examples of the heterocyclic aromatic compound containing a nitrogen atom include N,N-dimethyl-4-aminopyridine (DMAP), 4-pyrrolidinopyridine (PPY), pyrrocolin, imidazole, pyrimidine and purine.

Examples of the N-heterocyclic carbine include 1,3-di-tert-butylimidazol-2-ylidene (ITBU).

Among them, DABCO, DBU, DPG, TBD, DMAP, PPY, and ITBU are preferable, as they have high nucleophilicity without being greatly affected by steric hindrance, or they have such boiling points that they can removed under the reduced pressure.

Among these organic catalysts, for example, DBU is liquid at room temperature, and has a boiling point. In the case where such organic catalyst is selected for use, the organic catalyst can be removed substantially quantitatively from the obtained polymer by treating the polymer under the reduced pressure. Note that, the type of the organic solvent, or whether or not a removal treatment is performed, is determined depending on an intended use of a generated polymer product.

---Metal Catalyst---

The metal catalyst is appropriately selected depending on the intended purpose without any limitation, and examples thereof include a tin compound, an aluminum compound, a titanium compound, a zirconium compound, and an antimony compound.

Examples of the tin compound include tin octylate, tin dibutylate, and bis(2-ethylhexanoic acid)tin salt.

Examples of the aluminum compound include aluminum acetylacetonate, and aluminum acetate.

Examples of the titanium compound include tetraisopropyl titanate, and tetrabutyl titanate.

Examples of the zirconium compound include zirconium isopropoxide.

Examples of the antimony compound include antimony trioxide.

An amount and type of the catalyst for use cannot be determined unconditionally as they vary depending on a combination of the compressive fluid and the ring-opening polymerizable monomer for use, but the amount thereof is preferably 0.01 mol% to 15 mol%, more preferably 0.1 mol% to 1 mol%, and even more preferably 0.3 mol% to 0.5 mol%, relative to 100 mol% of the ring-opening polymerizable monomer. When the amount thereof is smaller than 0.01 mol%, the catalyst is deactivated before completion of the polymerization reaction, and as a result a polymer having a target molecular weight cannot be obtained in some cases. When the amount thereof is greater than 15 mol%, it may be difficult to control the polymerization reaction.

In the case where the intended use of a generated product obtained in the polymerization step requires safety and stability, the catalyst for use in the polymerization is preferably the organic catalyst (an organic catalyst free from a metal atom).

--Additives --

In the polymerization step, additives may be optionally added. Examples of the additives include a surfactant, an antioxidant, a stabilizer, an anticlouding agent, a UV ray-absorber, a pigment, a colorant, inorganic particles, various fillers, a thermal stabilizer, a flame retardant, a crystal nucleating agent, an antistatic agent, a surface wet improving agent, an incineration adjuvant, a lubricant, a natural product, a releasing agent, a plasticizer. If necessary, a polymerization terminator (e.g., benzoic acid, hydrochloric acid, phosphoric acid, metaphosphoric acid, acetic acid and lactic acid) may be used after completion of polymerization reaction.

An amount of the additives varies depending on intended purpose for adding the additive, or a type of the additives, but it is preferably 0 parts by mass to 5 parts by mass, relative to 100 parts by mass of the polymer composition.

The surfactant for use is preferably a surfactant which is dissolved in the compressive fluid, and has compatibility to both the compressive fluid and the ring-opening polymerizable monomer. Use of such surfactant can give effects that the polymerization reaction can be uniformly preceded, and the resultant polymer has a narrow molecular weight distribution and be easily produced as particles. When the surfactant is used, the surfactant may be added to the compressive fluid, or may be added to the ring-opening polymerizable monomer. In the case where carbon dioxide is used as the compressive fluid, for example, a surfactant having groups having affinity with carbon dioxide and groups having affinity with the monomer can be used. Examples of such surfactant include a fluorosurfactant, and a silicone surfactant.

Examples of the stabilized include epoxidized soybean oil, and carbodiimide.

Examples of the antioxidant include 2,6-di-t-butyl-4-methyl phenol, and butylhydroxyanisol.

Examples of the anticlouding agent include glycerin fatty acid ester, and monostearyl citrate.

Examples of the filler include clay, talc, and silica, which have effects as a UV-ray absorbing agent, a thermal stabilizer, a flame retardant, an internal mold release agent, and a crystal nucleus agent.

Examples of the pigment include titanium oxide, carbon black, and ultramarine blue.

-Compressive Fluid-

As for the compressive fluid, any of those identical to the compressive fluid for use in the extraction step can be used.

Among them, carbon dioxide is preferable, because the critical pressure and critical temperature of carbon dioxide are respectively about 7.4 MPa, and about 31°C, and thus a supercritical state of carbon dioxide is easily formed. In addition, carbon dioxide is non-flammable, and therefore it is easily handled.

In the case where supercritical carbon dioxide is used as a solvent, it has been conventionally considered that carbon dioxide is not suitable for living anionic polymerization, as it may react with basic and nucleophilic substances (see "The Latest Applied Technology of Supercritical Fluid (CHO RINKAI RYUTAI NO SAISHIN OUYOU GIJUTSU)," p. 173, published by NTS Inc. on March 15, 2004). However, the present inventors have found that, overturning the conventional insight, a polymerization reaction progresses quantitatively for a short period, by stably coordinating a basic and nucleophilic organic catalyst with a ring-opening monomer even in supercritical carbon dioxide, to thereby open the ring structure thereof, and as a result, the polymerization reaction progresses livingly. In the present specification, the term "living" means that the reaction progresses quantitatively without a side reaction such as a transfer reaction or termination reaction, so that a molecular weight distribution of an obtained polymer is relatively narrow, and is monodispersible.

A polymerization reaction can be performed at low temperature in the polymerization step, as the compressive fluid is used. Therefore, a depolymerization reaction is significantly inhibited compared to conventional melt polymerization. As a result, the polymerization rate can achieve 96 mol% or greater, preferably 98 mol% or greater. Note that, the polymerization rate is a ratio of the ring-opening polymerization monomer contributed to generation of a polymer, relative to the ring-opening polymerizable monomer as a raw material. An amount of the ring-opening polymerizable monomer contributed to generation of polymer can be determined by subtracting an amount of the unreacted ring-opening polymerizable monomer (an amount of the ring-opening polymerizable monomer residues) from the amount of the generated polymer.

A polymer obtained from the intermediate polymer in the method for producing a polymer is preferably a copolymer containing two or more polymer segments.

Moreover, a polymer obtained from the intermediate polymer in the method for producing a polymer is preferably a stereo complex.

Taking a polylactic acid stereo complex as an example, the "stereo complex" is a polylactic acid composition containing a poly D-lactic acid component, and a poly L-lactic acid component, having containing stereo complex crystals, and having the stereo complex crystallization degree, which is represented by the following formula (i), of 90% or greater.

The stereo complex polymerization degree can be obtained using the following formula (i) based on heat ($\Delta Hmh$) of melting polylactic acid homocrystals at lower than 190°C, and heat ($\Delta Hmsc$) of melting polylactic acid stereo complex at 190°C or higher, which are observed by a measurement performed by a differential scanning calorimeter (DSC).

$$(S)=[\Delta Hmsc/(\Delta Hmh+\Delta Hmsc)]\times 100 \ (i)$$

«Effect of the Present Embodiment »

The method for producing according the present embodiment exhibits effects that a large amount of an organic solvent is not used as a compressive fluid is used in the extraction step, unlike re-deposition with an organic solvent, which has been performed in the conventional art, and the low-molecular-weight compound can be removed from the intermediate polymer without providing a step for removing an organic solvent. Moreover, the method exhibits effect that a depolymerization reaction is significantly inhibited, and an amount of the ring-opening polymerizable monomer can be efficiently reduced compare to a conventional extraction method, in which an intermediate polymer is turned into a melted state using supercritical carbon dioxide at temperature equal to or higher a melting point of the intermediate polymer, as a low-molecular-weight compound can be extracted at low temperature in the present method by bringing the intermediate polymer into contact with, and melting the intermediate polymer in the compressive fluid having a density of 230 kg/m$^3$ or greater at temperature lower than the melting point of the intermediate polymer. Moreover, the intermediate polymer and the compressive fluid are homogeneously mixed by setting a ratio (a mass of the intermediate polymer/a mass of the compressive fluid) of the intermediate polymer to the compressive fluid to be in the range of 0.05 to 10 so that the low-molecular-weight compound contained in the intermediate polymer can be efficiently removed. By melting the intermediate polymer, further more, an amount of the ring-opening polymerizable monomer can be efficiently reduced, compared to a conventional method for extracting the low-molecular-weight compound from an intermediate polymer in a solid (pellet) state using supercritical carbon dioxide.

(Polymer Product)

The polymer product of the present invention is a polymer obtained by the method for producing a polymer according to the present invention.

An amount of the low-molecular-weight compound in the polymer product is preferably 1,000 ppm by mass or less, more preferably 500 ppm by mass or less, even more preferably 250 ppm by mass or less, and particularly preferably 100 ppm by mass or less.

An amount of the resin-opening polymerizable monomer residue in the polymer product is preferably 500 ppm by mass or less, more preferably 250 ppm by mass or less, and even more 100 ppm by mass or less.

In a preferable embodiment, the polymer product is a polymer product, which is obtained by the method for producing a polymer according to the present invention, and in which an amount of the resin-opening polymerizable monomer residue is 100 ppm by mass or less.

By using the intermediate polymer, in which an amount of the low-molecular-weight compound is 10,000 ppm by mass or less (preferably 5,000 ppm by mass or less, more preferably 2,500 ppm by mass or less, even more preferably 1,000 ppm by mass or less), the low-molecular-weight compound can be efficiently extracted in the extraction step, and a polymer product whose low-molecular-weight compound content is sufficiently reduced (for example, an amount of the ring-opening polymerizable monomer residues is less than 100 ppm by mass) is suitably obtained.

Moreover, an intermediate polymer, in which an amount of the low-molecular-weight compound is 10,000 ppm or less, can be suitably generated by the polymerization step using the compressive fluid (the supercritical polymerization step). As a result, the low-molecular-weight compound can be efficiently extracted in the following extraction step, and a polymer product whose low-molecular-weight compound content is sufficiently reduced (for example, an amount of the ring-opening polymerizable monomer residues is less than 100 ppm by mass) can be suitably obtained.

<Molecular Weight of Polymer Product>

The weight average molecular weight of the polymer product can be adjusted depending on the intermediate polymer for use, or an amount of the initiator used for generating the intermediate polymer. The weight average molecular weight can be appropriately adjusted depending on the intended use, and is not particularly limited. For example, the weight average molecular weight is typically 12,000 to 500,000, preferably 100,000 to 200,000. Note that, in the present embodiment, the weight average molecular weight is calculated based on a measurement obtained by gel permeation chromatography (GPC). When the weight average molecular weight is greater than 500,000, productivity is low because of the increased viscosity, which is not economically advantageous. When the weight average molecular weight is smaller than 12,000, it may not be preferable because a resulting polymer may have insufficient strength to function as a polymer. The value (Mw/Mn) obtained by dividing Mw of the polymer product by the number average molecular weight Mn of the polymer product is preferably 1.0 to 2.5, more preferably 1.0 to 2.0. When the value Mw/Mn is greater than 2.5, an amount of low-molecular-weight components becomes large, and degradability may be excessively high.

<Amount of Ring-Opening Polymerizable Monomer Residues>

The polymer product has excellent safety and stability, because the unreacted ring-opening polymerizable monomer is removed in the extraction step, and an amount of the ring-opening polymerizable monomer residues is extremely small, that is a half or less of the intermediate polymer (preferably 500 ppm by mass or less, more preferably 250 ppm by mass or less, even more preferably less than 100 ppm by mass.

An amount of the ring-opening polymerizable monomer residues in the polymer product (polylactic acid) can be measured in accordance with a measuring method of a lactide amount described in "Voluntary standard associated with food packaging formed of a synthetic resin, such as polyolefine, the revised 3rd edition, supplemented in June, 2004, Part 3, Hygienic test method, p13." Specifically, a polymer product, such as polylactic acid, is homogeneously dissolved in dichloromethane. To the resulting solution, a mixed solution of acetone and cyclohexane is added, to re-deposit the polymer product. The supernatant liquid as obtained is provided to a gas chromatograph (GC) equipped with a flame ionization detector (FID) to separate monomer residues (lactide in case of polylactic acid) and catalyst residues. The separated monomer residues and catalyst residues are subjected quantitative determination by an internal reference method, to thereby measure an amount of the monomer residues (an amount of ring-opening polymerizable monomer residues) in the polymer product, and an amount of the catalyst residues in the polymer product.. Note that, gas chromatography (GC) can be performed under the following conditions.

« Measuring Conditions of GC»

Column: capillary column
Agilent J&W GC Column-DB-17ms (manufactured by Agilent Technologies, 30 m (length) $\times$ 0.25 mm (inner diameter), film thickness: 0.25 $\mu$m)
Internal Reference: 2,6-dimethyl-$\gamma$-pyrone
Column flow rate: 1.8 mL/min
Column temperature: 50°C for 1 minute, heating at a constant heating speed of 25°C to 320°C, retaining temperature at 320°C for 5 minutes.
Detector: Flame ionization (FID)

<Amount of Catalyst Residue>

The polymer product has excellent safety and stability because the catalyst is removed in the extraction step, and an amount of the catalyst residues is extremely small, i.e., 500 ppm by mass or less, preferably 100 ppm by mass or less.

«Measuring Method of Amount of Organic Catalyst Residue»

The amount of the organic catalyst residues can be measured by the aforementioned GC, in the same manner as the measurement of the amount of the monomer residues.

«Measuring Method of Amount of Metal Catalyst Residue»

A metal catalyst can be measured by ICP optical emission spectrometry (inductively coupled plasma high frequency atomic emission spectrometry) under the following conditions. Based on the measurement result thereof, an amount of catalyst residues can be determined.

Device: ICP optical emission spectrometer (ICP-OES/ICP-AES) SPS5100 type, manufactured by Hitachi High-Tech Science Corporation

After heating and decomposing a sample (polymer product) with sulfuric acid and nitric acid, the volume of the resultant is fixed using ultra pure water, to thereby prepare a test liquid. A quantitative analysis of Sn in the test liquid is performed by ICP-AES.

<Organic Solvent Residue>

As for the polymer product, an intermediate polymer produced by a method without using an organic solvent can be used. Moreover, the polymer product can be produced by a method containing the extraction step, which does not substantially used an organic solvent. Accordingly, the polymer product has excellent safety and stability, as the polymer product is substantially free from an organic solvent. In the present embodiment, an organic solvent is an organic solvent used for ring-opening polymerization, and is a solvent that dissolves a polymer product obtained by a ring-opening polymerization reaction. In the case where the polymer product obtained by the ring-opening polymerization reaction is polylactic acid (L-form 100%), examples of the organic solvent include a halogen solvent (e.g., chloroform, and methylene chloride) and tetrahydrofuran. The phrase "substantially free from an organic solvent" means an amount of the organic solvent in the polymer product measured by the following measuring method is a detection limit or lower.

« Measuring Method of Residual Organic Solvent »

To 1 part by mass of the polymer product that is a subject of a measurement, 2 parts by mass of 2-propanol is added, and the resulting mixture is dispersed for 30 minutes by applying ultrasonic waves, followed by storing the resultant over 1 day or longer in a refrigerator (5°C) to thereby extract the organic solvent in the polymer product. A supernatant liquid thus obtained is analyzed by gas chromatography (GC-14A, SHIMADZU CORPORATION) to determine quantities of the organic solvent and monomer residues in the polymer product, to thereby measure a concentration of the organic solvent. The measuring conditions for the analysis are as follows.

Device: GC-14A (SHIMADZU CORPORATION)
Column: CBP20-M 50-0.25
Detector: FID
Injection amount: 1 $\mu$L to 5 $\mu$L
Carrier gas: He, 2.5 kg/cm$^2$
Flow rate of hydrogen: 0.6 kg/cm$^2$
Flow rate of air: 0.5 kg/cm$^2$
Chart speed: 5 mm/min
Sensitivity: Range 101 $\times$ Atten 20
Temperature of column: 40°C
Injection temperature: 150°C

<Yellow Index (YI Value)>

The polymer product produced by the aforementioned production method has a lower amount of monomer residues and is obtained through polymerization at low reaction temperature, and therefore the polymer product is white in color with preventing discoloration, mainly yellowing. Note that, the degree of yellowing can be evaluated with the value of YI, which is determined by preparing a 2 mm-thick resin pellet, and measuring the pellet by means of a SM color computer (manufactured by Suga Test Instruments Co., Ltd.) in accordance with JIS-K7103. In the present embodiment, the polymer product being white means that the polymer product has the YI value of 5 or lower.

«Effects of the Present Embodiment»

The polymer product of the present embodiment is obtained by removing the low-molecular-weight compound contained in the intermediate polymer in the extraction step. As a result of the extraction step, the polymer product has an extremely small amount of the low-molecular-weight compound residues, preferably less than 100 ppm by mass. The polymer product can be produced without using an organic solvent, and has a small amount of the low-molecular-weight compound, such as an amount of the ring-opening polymerizable monomer residues. Therefore, the polymer product exhibits an effect of preventing the degradation in safety or stability thereof, which may be caused by the low-molecular-weight compound.

A polymer production device suitably used in the method for producing a polymer according to the present invention is explained with reference to drawings.

In the method for producing a polymer according to the present invention, a conventional polymer product can be used as the intermediate polymer. However, an example where an intermediate polymer is generated by, as the polymerization step, the polymerization step (supercritical polymerization) using the compressive fluid, followed by performing the extraction step is explained hereinafter.

[First Embodiment]

<Polymerization Reaction Device of Continuous System>

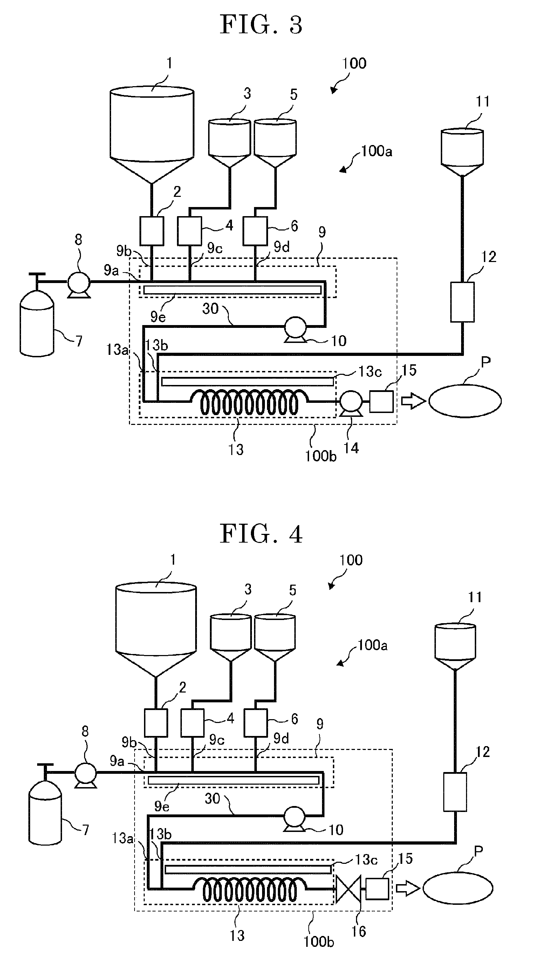

FIGs. 3 and 4 are each a diagram illustrating one example of the polymerization step. In the system diagram of FIG. 3, the polymerization reaction device 100 contains a supply unit 100a configured to supply raw materials, such as a ring-opening polymerizable monomer, and to supply a compressive fluid, and a polymerization reaction device main body 100b configured to polymerize the ring-opening polymerizable monomer by the supply unit 100a. The supply unit 100a contains tanks (1, 3, 5, 7, 11), measuring feeders (2, 4), and measuring pumps (6, 8, 12). The polymerization reaction device main body 100b contains a contact section 9 provided at one end of the polymerization reaction device main body 100b, a liquid feeding pump 10, a reaction section 13, a measuring pump 14, and an extrusion cap 15 provided at the other end.

The tank 1 of the supply unit 100a stores a ring-opening polymerizable monomer. The ring-opening polymerizable monomer to be stored may be a powder or liquid. The tank 3 stores solids (powder or particles) among the materials used as an initiator and additives. The tank 5 stores liquids among the materials used as the initiator and additives. The tank 7 stores a compressive fluid. Note that, the tank 7 may store gas or a solid that is transformed into a compressive fluid upon application of heat or pressure during the process for supplying to the contact section 9, or within the contact section 9. In this case, the gas or solid stored in the tank 7 is transformed in the state of (1), (2), or (3) of FIG. 2 in the contact section 9 upon application of heat or pressure.

The metering feeder 2 measures the ring-opening polymerizable monomer stored in the tank 1, and continuously supplies the measured ring-opening polymerizable monomer to the contact section 9. The measuring feeder 4 measures the solids stored in the tank 3 and continuously supplies the measured solids to the contact section 9. The measuring pump 6 measures the liquids stored in the tank 5 and continuously supplies the measured liquids to the contact section 9. The measuring pump 8 continuously supplies the compressive fluid stored in the tank 7 to the contact section 9 at a constant flow rate under constant pressure. Note that, in the present embodiment, the phrase "continuously supply" is used as a concept in reverse to a supply per batch, and means to supply in a manner that a polymer as a product of ring-opening polymerization is continuously obtained. Specifically, each material may be intermittently supplied as long as a polymer is continuously obtained. In the case where the materials used as the initiator and additives are all solids, the polymerization reaction device 100 may not contain the tank 5 and the measuring pump 6. Similarly, in the case where the materials used as the initiator and additives are all liquids, the polymerization reaction device 100 may not contain the tank 3 and the measuring feeder 4.

In the present embodiment, the polymerization reaction device 100b is a tube-shaped device having a monomer inlet, from which the ring-opening polymerizable monomer is introduced, at one end, and a polymer outlet, from which a polymer is discharged, at the other end. Moreover, a compressive fluid inlet from which the compressive fluid is introduced is provided at one end of the polymerization reaction device 100b, and a catalyst inlet from which a catalyst is introduced is provided between one end and the other end of the polymerization reaction device 100b. The devices equipped in the polymerization reaction device main body 100b are connected to each other with a pressure resistant pipeline 30, through which the raw materials, compressive fluid, or generated polymer are transported, as illustrated in FIG. 3. Moreover, each of the contact section 9, liquid feeding pump 10, and reaction section 13 of the polymerization reaction device has a tube-shaped member through which the aforementioned raw materials or the like are transported.

The contact section 9 of the polymerization reaction device main body 100b is composed of a pressure resistant device or tube, which is configured to continuously bring raw materials, such as the ring-opening polymerizable monomer, initiator, and additives, which are supplied from respective tanks (1, 3, 5), into contact with the compressive fluid supplied from the tank 7. In the contact section 9, the raw materials are melted, or dissolved by bringing the raw materials into contact with a compressive fluid. In the present embodiment, the term "melt" means that raw materials or a generated polymer is plasticized or liquidized with swelling as a result of the contact between the raw materials or generated polymer, and the compressive fluid. Moreover, the term "dissolve" means that the raw materials are dissolved in the compressive fluid. In the case where the ring-opening polymerizable monomer is dissolved, a flow phase is formed. In the case where the ring-opening polymerizable monomer is melted, a melt phase is formed. It is preferred that one phase of either the melt phase or the flow phase be formed for uniformly carrying out a reaction. In order to carry out the reaction in the state that a ratio of the raw materials is high relative to the compressive fluid, moreover, the ring-opening polymerizable monomer is preferably melted. Note that, in the present embodiment, the raw materials, such as the ring-opening polymerizable monomer, can be continuously brought into contact with the compressive fluid in the contact section 9 at the constant ratio of concentration, by continuously supplying the raw materials and the compressive fluid. As a result, the raw materials can be efficiently melted or dissolved.

The contact section 9 may be composed of a tank-shaped device, or a tube-shaped device, but it is preferably a tube-shape device from one end of which raw materials are fed, and from the other end of which a mixture, such as a melt phase, and a flow phase is taken out. As for such device, preferred are a single screw stirring device, a twin-screw stirring device where screws are engaged with each other, a biaxial mixer containing a plurality of stirring elements which are engaged or overlapped with each other, a kneader containing spiral stirring elements which are engaged with each other, and a static mixer. Among them, the two-axial or multi-axial stirrer stirring elements of which are engaged with each other is particularly preferable because there is a less amount of the depositions of the reaction product onto the stirrer or container, and it has self-cleaning properties. In the case where the contact section 9 is not equipped with a stirring device, the contact section 9 is composed of part of the pressure resistant pipeline 30. Note that, in the case where the contact section 9 is composed of part of the pipeline 30, a ring-opening polymerizable monomer supplied to the contact section 9 is preferably heated and liquidized in advance, in order to surely mix all of the materials in the contact section 9.

The contact section 9 has an inlet 9a, which is an example of an inlet configured to introduce a compressive fluid supplied from the tank 7 by the metering pump 8, an inlet 9b, which is an example of an inlet configured to introduce a ring-opening polymerizable monomer supplied from the tank 1 by the metering feeder 2, an inlet 9c configured to

introduce a powder supplied from the tank 3 by the metering feeder 4, and an inlet 9d configured to introduce a liquid supplied from the tank 5 by the metering pump 6. In the present embodiment, each inlet (9a, 9b, 9c, 9d) is composed of a tube-shaped member, such as part of a cylinder or pipe 30 configured to supply raw materials in the contact section 9, and a connector for connecting with each pipe through which each raw material or compressive fluid is transported. The connector is not particularly limited, and selected from conventional connectors, such as reducers, couplings, Y, T, and outlets. Moreover, a heater 9e configured to heat the supplied raw materials or compressive fluid is provided in the contact section 9.

A liquid feeding pump 10 is configured to feed a mixture, such as a melt phase or fluid phase formed in the contact section 9 to the reaction section 13. The tank 11 is configured to store a catalyst. The measuring pump 12 is configured to measure the catalyst stored in the tank 11 and supply the measured catalyst to the reaction section 13.

The reaction section 13 is composed of a pressure resistant device or tube, configured to mix the raw materials supplied by the liquid feeding pump 10 with the catalyst supplied by the measuring pump 12 to carry out ring-opening polymerization of the ring-opening polymerizable monomer. The reaction section 13 may be composed of a tank-shaped device, or a tube-shaped device, but it is preferably a tube-shaped device, as it gives less dead space. Moreover, a stirring device for stirring raw materials or a compressive fluid may be provided to the reaction section 13. As for the stirring device of the reaction section 13, preferred is a dual- or multi-axial stirrer having screws engaging with each other, stirring elements of 2-flights (rectangle), stirring elements of 3-flights (triangle), or circular or multi-leaf shape (clover shape) stirring wings, in view of self-cleaning. In the case where raw materials including the catalyst are sufficiently mixed in advance, a motionless mixer, which divides and compounds (recombines) the flows in multiple stages, can also be used as the stirring device. Examples of the motionless mixer include: multiflux batch mixers disclosed in Japanese examined patent application publication (JP-B) Nos. 47-15526, 47-15527, 47-15528, and 47-15533; a Kenics-type mixer disclosed in Japanese Patent Application Laid-Open (JP-A) No. 47-33166; and motionless mixers similar to those listed. In the case where the reaction section 13 does not contains a stirring device, the reaction section 13 is composed of part of the pressure resistant pipe 30. In this case, a shape of the pipe 30 is not particularly limited, but it is preferably a spiral shape in view of down-sizing of the device.

The reaction section 13 has an inlet 13a from which raw materials dissolved or melted in the contact section 9 is introduced, and an inlet 13b, which is an example of a catalyst inlet, from which the catalyst supplied from the tank 11 by the measuring pump 12 is introduced. In the present embodiment, each inlet (13a, 13b) is composed of a tube-shaped member, such as part of the cylinder or pipe 30 through which the raw materials are passed in the reaction section 13, and a connector for connecting with each pipe for supplying each raw material or compressive fluid. The connector is not particularly limited, and selected from conventional connectors, such as reducers, couplings, Y, T, and outlets. Note that, a gas outlet for removing evaporated products may be provided to the reaction section 13. Moreover, a heater 13c configured to heat the supplied raw materials may be provided to the reaction section 13.

FIG. 3 illustrates an example where one reaction section 13 is provided, but the polymerization reaction device 100 may contain two or more reaction sections 13. In the case where two or more reaction sections are used, the reaction (polymerization) conditions (e.g., temperature, catalyst concentration, pressure, average retention time, and stirring speed) for each reaction section may be identical, but it is preferred that optimal conditions for each reaction section be selected depending on the progress of the polymerization. Note that, it is not very good idea that excessively large number of the reaction sections 13 is connected to give many stages, as it may extend a reaction time, or a device may become complicated. The number of stages is preferably 1 to 4, more preferably 1 to 3.

In the case where polymerization is performed by means of a device having only one reaction section, it is typically believed that such device is not suitable for industrial productions, as a polymerization degree of an obtained polymer or an amount of monomer residues is unstable. It is considered that the instability thereof is caused because raw materials having the melt viscosity of a few poises to several tends poises and the polymerized polymer having the melt viscosity of approximately 1,000 poises are present together in the same container. On the other hand, the difference in viscosity inside the reaction section 13 (polymerization system) can be reduced by melting the raw materials and the generated polymer in the present embodiment, and therefore a polymer can be stably produced with a reduced number of stages compared to a conventional polymerization reaction device.

The measuring pump 14 is configured to discharge the intermediate polymer P obtained in the reaction section 13 from the extrusion cap 15, which is an example of the polymer outlet, to send out of the reaction section 13. Note that, the intermediate polymer P may be discharged from the reaction section 13 without using the measuring pump 14, by utilizing the pressure difference between inside and outside the reaction section 13. In this case, the pressure control valve 16 may be used instead of the measuring pump 14, as illustrated in FIG. 4, in order to control the pressure inside the reaction section 13, or the discharging amount of the intermediate polymer P.

<Continuous Polymerization Method>

Next, a polymerization step of the ring-opening polymerizable monomer using the polymerization reaction device 100 is explained. In the polymerization reaction device 100, the ring-opening polymerizable monomer and the compressive fluid are continuously supplied and brought into contact with each other to carry out ring-opening polymerization of the ring-opening polymerizable monomer, to thereby continuously obtain a polymer. First, each of the measuring feeders (2, 4), measuring pump 6, and measuring pump 8 is operated to continuously supply the ring-opening polymerizable monomer, initiator, additives, and compressive fluid from respective tanks (1, 3, 5, 7). As a result, the raw materials and the compressive fluid are continuously introduced from each inlet (9a, 9b, 9c, 9d) into the tube of the contact section 9. Note that, solid (powder or granular) raw materials may have lower measuring accuracy compared to liquid raw materials. In this case, the solid raw materials may be turned into liquid and stored in the tank 5, and then is introduced into the pipe of the contact section 9 by the measuring pump 6. The order for operating the measuring feeders (2, 4), measuring pump 6, and measuring pump 8 is not particularly limited. However, it is preferred that the measuring pump 8 be operated first, as the raw materials may be solidified due to reduction in temperature, if the initial raw materials are sent to the reaction section 13 without being in contact with the compressive fluid.

The feeding speed of each raw material by the each of measuring feeders (2, 4) and the measuring pump 6 is adjusted based on the predetermined quantity ratio of the ring-opening polymerizable monomer, initiator, and additives to give a constant ratio. A total mass of raw materials supplied per unit time (feeding speed of the raw materials (g/min)) by the measuring feeders (2, 4) and measuring pump 6 is adjusted based on the desired properties of the polymer or reaction time. Similarly, a mass of the compressive fluid supplied per unit time (feeding speed of the compressive fluid (g/min)) by the measuring pump 8 is adjusted based on the desired properties of the polymer or reaction time.

A ratio (may be referred to as a "feeding ratio" or a "blending ratio") of the feeding speed of the raw material and the feeding speed of the compressive fluid, which is represented by the following formula (i), is appropriately selected depending on the intended purpose without any limitation, but it preferably satisfies the following formula (i), more preferably 0.5 or greater, even more preferably 0.7 or greater, further more preferably 0.85 or greater. Moreover, the upper limit of the feeding ratio is preferably 0.99 or less, more preferably 0.95 or less, and further more preferably 0.90 or less.

$$1 > \frac{\text{Feeding speed of raw materials (g/min)}}{\text{Feeding speed of raw materials (g/min)} + \text{Feeding speed of compressive fluid (g/min)}} \geq 0.5$$

$$\text{Formula (i)}$$

When the feeding ratio is less than 0.5, n amount of the compressive fluid for use increases and thus not economical, and moreover as the density of the ring-opening polymerizable monomer becomes low, polymerization speed may slow down. When the feeding ratio is less than 0.5, moreover, the mass of the compressive fluid is greater than the mass of the raw materials, and therefore a melt phase where the ring-opening polymerizable monomer is melted, and a fluid phase where the ring-opening polymerizable monomer is dissolved in the compressive fluid are co-existed, which may make uniform proceeding of the reaction difficult.

By setting the feeding ratio to 0.5 or greater, a reaction progresses with the high concentration of the raw materials and a polymer product (i.e., high solid content) when the raw materials and the compressive fluid are sent to the reaction section 13. The solid content in the polymerization system here is largely different from a solid content in a polymerization system where polymerization is performed by dissolving a small amount of a ring-opening polymerizable monomer in a significantly large amount of a compressive fluid in accordance with a conventional production method. The production method of the present embodiment is characterized by that a polymerization reaction progresses efficiently and stably in a polymerization system having a high solid content. When the feeding ratio is greater than 0.99, there is a possibility that the compressive fluid may not sufficiently dissolve the ring-opening polymerizable monomer therein, and the intended reaction may not be uniformly carried out.

Since the raw materials and the compressive fluid are each continuously introduced into the pipe of the contact section 9, they are continuously brought into contact with each other. As a result, each of the raw materials, such as the ring-opening polymerizable monomer, the initiator, and the additives, are melted or dissolved in the contact section 9. In the case where the contact section 9 contains a stirring device, the raw materials and compressive fluid may be stirred. In order to prevent the introduced compressive fluid from turning into gas, the internal temperature and pressure of the pipe of the reaction section 13 are controlled to the temperature and pressure both equal to or higher than at least a triple point of the compressive fluid. The control of the temperature and pressure here is performed by adjusting the output of the heater 9e of the contact section 9, or adjusting the feeding rate of the compressive fluid. In the present embodiment, the temperature for melting the ring-opening polymerizable monomer may be the temperature equal to or lower than the melting point of the ring-opening polymerizable monomer under atmospheric pressure. It is assumed that the internal pressure of the contact section 9 becomes high under the influence of the compressive fluid so that the melting point of the ring-opening polymerizable monomer becomes lower than the melting point thereof under the atmospheric pressure. Accordingly, the ring-opening polymerizable monomer is melted in the contact section 9, even when an amount of the compressive fluid is small with respect to the ring-opening polymerizable monomer.

In order to melt or dissolve each of the raw materials efficiently, the timing for applying heat to or stirring the raw materials and compressive fluid in the contact section 9 may be adjusted. In this case, heating or stirring may be performed after bringing the raw materials and compressive fluid into contact with each other, or heating or stirring may be performed while bringing the raw materials and compressive fluid into contact with each other. To make melting of the materials even more certain, for example, the ring-opening polymerizable monomer and the compressive fluid may be brought into contact with each other after heating the ring-opening polymerizable monomer at the temperature equal to or higher than the melting point thereof. In the case where the contact section 9 is a biaxial mixing device, for example, each of the aforementioned aspects may be realized by appropriately setting an alignment of screws, arrangement of inlets (9a, 9b, 9c, 9d), and temperature of the heater 9e.

In the present embodiment, the additives are supplied to the contact section 9 separately from the ring-opening polymerizable monomer, but the additives may be supplied together with ring-opening polymerizable monomer. Alternatively, the additives may be supplied after completion of a polymerization reaction. In this case, after taking the obtained intermediate polymer from the reaction section 13, the additive may be added to the intermediate polymer while kneading the mixture thereof.

The raw materials melted or dissolved in the contact section 9 are each sent by the feeding pump 10, and supplied into the reaction section 13 from the inlet 13a. Meanwhile, the catalyst in the tank 11 is measured by the metering pump 12, and the predetermined amount thereof is supplied to the reaction section 13 through the inlet 13b. The catalyst can function even at room temperature, and therefore, in the present embodiment, the catalyst is added after melting the raw materials in the compressive fluid. In the conventional art, the timing for adding the catalyst has not been discussed in the ring-opening polymerization of the ring-opening polymerizable monomer using the compressive fluid. In the present embodiment, in the course of the ring-opening polymerization, the catalyst (especially, the organic catalyst) is added to the polymerization system in the reaction section 13, in which the mixture of the raw materials, such as the ring-opening polymerizable monomer, and initiator, are sufficiently dissolved or melted in the compressive fluid, because of the high activity of the catalyst. When the catalyst is added to the mixture in the state where the mixture is not sufficiently dissolved or melted, a reaction may unevenly progresses.

The raw materials sent by the liquid feeding pump 10 and the catalyst supplied by the measuring pump 12 are optionally sufficiently stirred in the stirring device of the reaction section 13, or heated to the predetermined temperature by the heater 13c when transported. As a result, ring-opening polymerization reaction of the ring-opening polymerizable monomer is carried out in the reaction section 13 in the presence of the catalyst (polymerization step).

The lower limit of the temperature (polymerization reaction temperature) for ring-opening polymerization of the ring-opening polymerizable monomer is not particularly limited. In the case where an organic catalyst is used, however, it is preferably 40°C, more preferably 50°C, even more preferably 60°C. When the polymerization reaction temperature is lower than 40°C, it may be take a long time to melt the ring-opening polymerizable monomer with the compressive fluid depending on a type of the ring-opening polymerizable monomer for use, melting may be insufficient, or an activity of the catalyst may be low. As a result, the reaction speed may be reduced during the polymerization, and therefore it may not be able to proceed to the polymerization reaction quantitatively.

In the case where a metal catalyst is used, the upper limit of polymerization reaction temperature is not particularly limited, but it is 150°C, or temperature higher than a melting point of the ring-opening polymerizable monomer by 50°C, whichever higher. The upper limit of the polymerization reaction temperature is preferably 100°C, or temperature that is higher than the melting point of the ring-opening polymerizable monomer by 30°C, whichever higher. The upper limit of the polymerization reaction temperature is more preferably 90°C, or the melting point of the ring-opening polymerizable monomer, whichever higher. The upper limit of the polymerization reaction temperature is even more preferably 80°C, or temperature that is lower than the melting point of the ring-opening polymerizable monomer by 20°C, whichever higher. When the polymerization reaction temperature exceeds the temperature higher than the melting point of the ring-opening polymerizable monomer by 30°C, a depolymerization reaction, which is a reverse reaction of ring-opening polymerization, tends to be caused equilibrately, and therefore the polymerization reaction is difficult to proceed quantitatively. In the case where a ring-opening monomer having low melting point, such as a ring opening polymerizable monomer that is liquid at room temperature, is used, the polymerization reaction temperature may be temperature that is higher than the melting point by 30°C or greater to enhance the activity of the catalyst. Even in this case, the polymerization reaction temperature is preferably 100°C or lower. Note that, the polymerization reaction temperature is controlled by a heater 13c equipped with the reaction section 13, or by externally heating the reaction section 13. When the polymerization reaction temperature is measured, an intermediate polymer obtained by the polymerization reaction may be used for the measurement.

In a conventional production method of a polymer using supercritical carbon dioxide, polymerization of a ring-opening polymerizable monomer is carried out using a large amount of supercritical carbon dioxide, as supercritical carbon dioxide has low ability of dissolving a polymer. In accordance with the polymerization method of the present embodiment, ring-opening polymerization of a ring-opening polymerizable monomer is performed with a high concentration, which has not been realized in a conventional method for producing a polymer using a compressive fluid. In this case, the internal pressure of the reaction section 13 becomes high in the presence of the compressive fluid, and thus glass transition temperature (Tg) of the generated polymer becomes low. As a result, the generated polymer has low viscosity, and therefore a ring-opening reaction uniformly progresses even in the state where the concentration of the polymer produce as the intermediate polymer is high.

In the present embodiment, the polymerization reaction time (the average retention time in the reaction section 13) is appropriately set depending on a target molecular weight of a polymer product to be produced. The polymerization reaction time is not particularly limited, as long as the monomer is consumed and the reaction is completed within such time, but the polymerization reaction time can be reduced to 20 minutes or shorter in the present embodiment. This polymerization reaction time is short, which has not been realized before in polymerization of a ring-opening polymerizable monomer in a compressive fluid.

The pressure for the polymerization, i.e., the pressure of the compressive fluid, may be the pressure at which the compressive fluid supplied by the tank 7 becomes a liquid gas ((2) in the phase diagram of FIG. 2), or high pressure gas ((3) in the phase diagram of FIG. 2), but it is preferably the pressure at which the compressive fluid becomes a supercritical fluid ((1) in the phase diagram of FIG. 2). By making the compressive fluid into the state of a supercritical fluid, melting of the ring-opening polymerizable monomer is accelerated to uniformly and quantitatively progress a polymerization reaction. In the case where carbon dioxide is used as the compressive fluid, the pressure is 3.7 MPa or higher, preferably 5 MPa or higher, more preferably 7.4 MPa or higher, which is the critical pressure or higher, in view of efficiency of a reaction and polymerization rate. In the case where carbon dioxide is used as the compressive fluid, moreover, the temperature thereof is preferably 25°C or higher from the same reasons.

The moisture content in the reaction section 13 is preferably 4 mol% or less, more preferably 1 mol% or less, and even more preferably 0.5 mol% or less, relative to 100 mol% of the ring-opening polymerizable monomer. When the moisture content is greater than 4 mol%, it may be difficult to control a molecular weight of a resulting product as the moisture itself acts as an initiator. In order to control the moisture content in the polymerization system, an operation for removing moistures contained in the ring-opening polymerizable monomer and other raw materials may be optionally provided as a pretreatment.

The intermediate polymer P obtained after the ring-opening polymerization reaction in the reaction section 13 is discharged outside the reaction section 13 by the measuring pump 14. The speed for discharging the intermediate polymer P by the measuring pump 14 is preferably constant to attain a uniform polymer product. To this end, the internal pressure of the polymerization system filled with the compressive fluid is kept constant and the operation is performed. In order to maintain the back pressure of the measuring pump 14 constant, the feeding speeds of a feeding system inside the reaction section 13 and that of the feeding pump 10 are controlled. In order to maintain the back pressure of the liquid feeding pump 10 constant, similarly, a feeding system and measuring feeder (2, 4) inside the contact section 9 and the feeding speed of the measuring pump (6, 8) are controlled. The control system may be an ON-OFF control system, i.e., an intermittent feeding system, but it is in most cases preferably a continuous or stepwise control system where the rational speed of the pump or the like is gradually increased or decreased. Any of these controls realizes to stably provide a homogeneous intermediate polymer.

<Polymerization Reaction Device of Batch System>

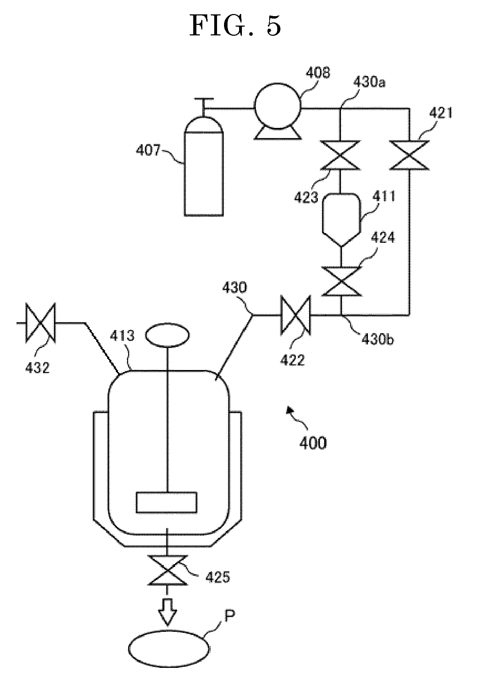

Next, the polymerization reaction device 400 of the batch system illustrated in FIG. 5 is explained. In the system diagram of FIG. 5, the polymerization reaction device 400 contains a tank 407, a measuring pump 408, an addition pot 411, a reaction vessel 413, and valves (421, 422, 423, 424, 425). The aforementioned devices are connected with a pressure resistant pipe 430 as illustrated in FIG. 5. Moreover, the connectors (430a, 430b) are provided to the pipe 430.

The tank 407 is configured to store a compressive fluid. Note that, the tank 407 may store gas or solid that is transformed into a compressive fluid upon application of heat or pressure during the process for supplying to the reaction vessel 413, or within the reaction vessel 413. In this case, the gas or solid stored in the tank 407 is transformed into the state of (1), (2), or (3) of FIG. 2 in the reaction vessel 413, upon application of heat or pressure.

The measuring pump 408 is configured to supply the compressive fluid stored in the tank 407 to the reaction vessel 413 at constant flow rate under constant pressure. The addition pot 411 is configured to store a catalyst to be added to the raw materials in the reaction vessel 413. The valves (421, 422, 423, 424) are each configured to switch between a pass for supplying the compressive fluid stored in the tank 407 to the reaction vessel 413 via the addition pot 411, and a pass for supplying the compressive fluid to the reaction vessel 413 without going through 411, by opening or closing thereof.

Before starting polymerization, the ring-opening polymerizable monomer and the initiator are accommodated in the reaction vessel 413 in advance. The reaction vessel 413 is a pressure resistant vessel configured to bring the ring-opening polymerizable monomer and initiator accommodated therein in advance, the compressive fluid supplied from the tank 407 and the catalyst supplied from the addition pot 411 into contact with each other to carry out ring-opening polymerization of the ring-opening polymerizable monomer. Note that, a gas outlet for removing evaporated products may be provided to the reaction vessel 413. Moreover, the reaction vessel 413 is equipped with a heater for heating the raw materials and the compressive fluid. Furthermore, the reaction vessel 413 is equipped with a stirring device for stirring the raw materials and the compressive fluid. When there is a difference in density between the raw materials and the generated polymer, the generated polymer can be prevented from setting by stirring the stirring device, and therefore the polymerization reaction can be performed more uniformly and quantitatively. The valve 425 is open after completing the polymerization reaction, to discharge the compressive fluid and a generated product (polymer) as an intermediate polymer in the reaction vessel 413.

<Polymerization Method of Batch System>

Next, the batch system polymerization of the ring-opening polymerizable monomer using the polymerization reaction device 400 is explained. In the polymerization reaction device 400, the raw materials containing the ring-opening polymerizable monomer and the compressive fluid are brought into contact with each other at the predetermined blending ratio, to carry out ring-opening polymerization of the ring-opening polymerizable monomer in the presence of the catalyst. First, the measuring pump 408 is operated and the valves (421, 422) are open so that the compressive fluid stored in the tank 407 is supplied to the reaction vessel 413 without going through the addition pot 411. As a result, the ring-opening polymerizable monomer and initiator, which have been accommodated in the reaction vessel 413 in advance, and the compressive fluid supplied from the tank 407 are brought into contact with each other, and the mixture is stirred by the stirring device, so that the raw materials, such as the ring-opening polymerizable monomer, are melted inside the reaction vessel 413. The ring-opening polymerizable monomer is preferably melted in the polymerization step by bringing the raw materials containing the ring-opening polymerizable monomer into contact with the compressive fluid. In the case where ring-opening polymerization is performed with melting the ring-opening polymerizable monomer, the reaction can progress with a high ratio of the raw materials, and therefore an efficiency of the reaction improves.

In this case, a ratio of the raw materials and the compressive fluid in the reaction vessel 413 (may be referred to as a "blending ratio" hereinafter) is preferably within the range represented by the following formula (ii).

$$1 \; > \; \frac{\text{Mass of raw materials}}{\text{Mass of raw materials} + \text{Mass of compressive fluid}} \; \geq \; 0.5$$

$$\text{Formula (ii)}$$

Note that, in the present embodiment, the raw materials in the formula (ii) include the ring-opening polymerizable monomer and the initiator. The blending ratio is appropriately selected depending on the intended purpose without any limitation, but it is preferably 0.5 or greater, more preferably 0.7 or greater, and even more preferably 0.85 or greater. Moreover, the upper limit of the blending ratio is preferably less than 1. When the blending ratio is less than 0.5, an amount of the compressive fluid for use increases and thus not economical, and moreover as the density of the ring-opening polymerizable monomer becomes low, polymerization speed may slow down. When the blending ratio is less than 0.5, moreover, the mass of the compressive fluid is greater than the mass of the raw materials, and therefore a melted phase of the melted ring-opening polymerizable monomer and a fluid phase in which the ring-opening polymerizable monomer is melted with the compressive fluid are co-existed, which makes uniform proceeding of the reaction difficult.

In order to prevent the supplied compressive fluid from turning back to gas, the temperature and pressure for melting the ring-opening polymerizable monomer in the reaction vessel 413 are controlled to the temperature and pressure both equal to or higher than at least a triple point of the compressive fluid.. The control of the temperature and pressure here is performed by adjusting the output of the heater of the reaction vessel 413, or adjusting the opening degrees of the valves (421, 422). In the present embodiment, the temperature for melting the ring-opening polymerizable monomer may be the temperature equal to or lower than the melting point of the ring-opening polymerizable monomer under atmospheric pressure. It is assumed that the internal pressure of the reaction vessel 413 becomes high under the influence of the compressive fluid so that the melting point of the ring-opening polymerizable monomer becomes lower than the melting point thereof under the atmospheric pressure. Accordingly, the ring-opening polymerizable monomer is melted in the reaction vessel 413, even when an amount of the compressive fluid is small with respect to the ring-opening polymerizable monomer.

In order to melt or dissolve each of the raw materials efficiently, the timing for applying heat to or stirring the raw materials and compressive fluid in the reaction vessel 413 may be adjusted. In this case, heating or stirring may be performed after bringing the raw materials and compressive fluid into contact with each other, or heating or stirring may be performed while bringing the raw materials and compressive fluid into contact with each other. Moreover, the ring-opening polymerizable monomer and he compressive fluid may be brought into contact with each other, after applying heat equal to or higher than the melting point of the ring-opening polymerizable monomer to melt the ring-opening polymerizable monomer in advance.

Subsequently, the valves (423, 424) are open to supply the catalyst in the addition pot 411 to the reaction vessel 413. The catalyst supplied to the 413 is optionally sufficiently stirred in the stirring device of the reaction vessel 413, and heated to the predetermined temperature by the heater. As a result, the ring-opening polymerization of the ring-opening polymerizable monomer is carried out in the presence of the catalyst in the reaction vessel 413, to thereby generate a polymer.

In the case where the metal catalyst is used, the lower limit of the temperature (polymerization reaction temperature) for ring-opening polymerization of the ring-opening polymerizable monomer is preferably temperature lower than the melting point of the ring-opening polymerizable monomer by 50°C, more preferably temperature lower than the melting point thereof by 40°C. The upper limit thereof is preferably temperature higher than the melting point of the ring-opening polymerizable monomer by 50°C, more preferably temperature higher than the melting point thereof by 40°C. When the polymerization reaction temperature is lower than the temperature that is lower than the melting point of the ring-opening polymerizable monomer by 50°C, the reaction speed tends to slow down, and it may not be able to proceed to the polymerization reaction quantitatively. When the polymerization reaction temperature is higher than the temperature that is higher than the melting point of the ring-opening polymerizable monomer by 50°C, a depolymerization reaction tends to be caused equilibrately, and therefore the polymerization reaction is difficult to proceed quantitatively. The ring-opening polymerization monomer may be reacted through the ring-opening polymerization reaction at temperature outside the aforementioned range depending on a combination of the compressive fluid, ring-opening polymerizable monomer, and catalyst for use. In the case where a ring-opening monomer having low melting point, such as a ring opening polymerizable monomer that is liquid at room temperature, is used, for example, the polymerization reaction temperature may be the temperature higher the aforementioned range to enhance the activity of the catalyst. Even in this case, the polymerization reaction temperature is preferably 150°C or lower, more preferably 100°C or lower.

In a conventional production method of a polymer using supercritical carbon dioxide, polymerization of a ring-opening polymerizable monomer is carried out using a large amount of supercritical carbon dioxide, as supercritical carbon dioxide has low ability of dissolving a polymer. n accordance with the polymerization method of the present embodiment, ring-opening polymerization of a ring-opening polymerizable monomer is performed with a high blending ratio, which has not been realized in a conventional method for producing a polymer using a compressive fluid. In this case, the internal pressure of the reaction vessel 413 becomes high in the presence of the compressive fluid, and thus glass transition temperature (Tg) of the generated polymer becomes low. As a result, the generated polymer has low viscosity, and therefore a ring-opening reaction uniformly progresses even in the state where the concentration of the polymer is high.

In the present embodiment, the polymerization reaction time is appropriately set depending on a target molecular weight of a polymer to be produced. In the case where the target weight average molecular weight is 3,000 to 300,000, the polymerization reaction time is within 2 hours.

The pressure for the polymerization, i.e., the pressure of the compressive fluid, may be the pressure at which the compressive fluid supplied by the tank 407 becomes a liquid gas ((2) in the phase diagram of FIG. 2), or high pressure gas ((3) in the phase diagram of FIG. 2), but it is preferably the pressure at which the compressive fluid becomes a supercritical fluid ((1) in the phase diagram of FIG. 2). By making the compressive fluid into the state of a supercritical fluid, melting of the ring-opening polymerizable monomer is accelerated to uniformly and quantitatively progress a polymerization reaction. In the case where carbon dioxide is used as the compressive fluid, the pressure is preferably 3.7 MPa or greater, preferably 5 MPa or greater, and even more preferably 7.4 MPa, which is critical pressure, or greater, in view of efficiency of the reaction, and polymerization rate. In the case where carbon dioxide is used as the compressive fluid, moreover, the temperature thereof is preferably 25°C or higher from the same reasons.

The moisture content in the reaction vessel 413 is preferably 4 mol% or less, more preferably 1 mol% or less, and even more preferably 0.5 mol% or less, relative to 100 mol% of the ring-opening polymerizable monomer. When the moisture content is greater than 4 mol%, it may be difficult to control a molecular weight of a resulting product as the moisture itself acts as an initiator. In order to control the moisture content in the polymerization system, an operation for removing moistures contained in the ring-opening polymerizable monomer and other raw materials may be optionally provided as a pretreatment.

It is also possible to introduce a urethane bond or ether bond into a polymer obtained by polymerizing the ring-opening polymerizable monomer. Similarly to the ring-opening polymerizable monomer, the urethane bond or ether bond can be introduced by carrying out a polyaddition reaction in a compressive fluid with addition of an isocyanate compound or glycidyl compound. In this case, preferred in order to control a molecular structure is a method containing separately adding the compound to carry out a reaction, after completing the polymerization reaction of the ring-opening polymerizable monomer.

The isocyanate compound used for the polyaddition reaction is not particularly limited, and examples thereof include a polyfunctional isocyanate compound, such as isophorone diisocyanate, hexamethylene diisocyanate, lysin diisocyanate, xylene diisocyanate, tolylene diisocyanate, diphenyl methane diisocyanate, and cyclohexane diisocyanate. The glycidyl compound is not particularly limited, and examples thereof include a polyfunctional glycidyl compound, such as diethylene glycol diglycidyl ether, polyethylene glycol diglycidyl ether, neopentyl glycol diglycidyl ether, 1,6-hexanediol diglycidyl ether, and diglycidyl terephthalate.

The polymer P which has completed the ring-opening polymerization in the reaction vessel 413 is discharged from the valve 425, to thereby send the polymer P out of the reaction vessel 413.

Regardless of the continuous system or batch system, the polymerization rate of the ring-opening polymerizable monomer through the ring-opening polymerization in the polymerization step using the compressive fluid (supercritical polymerization step) is 97 mol% or greater, more preferably 98 mol or greater. As a result, the low-molecular-weight compound, such as the ring-opening polymerizable monomer residues, can be efficiently reduced in the following extraction step. Note that, the polymerization rate is a ratio of the ring-opening polymerization monomer contributed to generation of a polymer, relative to the ring-opening polymerizable monomer as a raw material. An amount of the ring-opening polymerizable monomer contributed to generation of polymer can be determined by subtracting an amount of the unreacted ring-opening polymerizable monomer (an amount of the ring-opening polymerizable monomer residues) from the amount of the generated polymer.

[Second Embodiment] (Applied Example)

Next, the second embodiment is explained as an applied example of the first example. In the production method of the first embodiment, the reaction progresses quantitatively with leaving hardly any ring-opening polymerizable monomer residue. Therefore, in the first method of the second embodiment, a complex, as an intermediate polymer, is synthesized by using the intermediate polymer produced in the production method of the first embodiment, and appropriately setting the timing for further adding one or more ring-opening polymerizable monomers. In the second method of the second embodiment, moreover, a complex, as an intermediate polymer, is synthesized by using two or more polymers including the intermediate polymer produced in the production method of the first embodiment, and continuously blending the two or more polymers in the presence of the compressive fluid. Note that, in the present embodiment, the complex means a copolymer having two or more polymer segments obtained by polymerization of monomers in a plurality of systems, or a mixture of two or more polymers obtained by polymerizing monomers in a plurality of systems. Hereinafter, two synthesis methods of a stereo complex, as one example of the complex, are explained. Note that, the "stereo complex" is a polymer (e.g., polylactic acid) containing a pair of components that are optical isomers to each other (e.g., a combination of D-lactic acid component, and poly L-lactic acid component), having stereo complex crystals, and having the stereo complex crystallization degree, which is represented by the following formula (i), of 90% or greater.

$$(S)=[\Delta Hmsc/(\Delta Hmh+\Delta Hmsc)]\times 100 \ (i)$$

In the formula (i), $\Delta Hmh$ is heat of melting homocrystals. In case of polylactic acid, for example, $\Delta Hmh$ is observed at temperature lower than 190°C. Moreover, $\Delta Hmsc$ is heat of melting stereo complex crystals, which is, for example, observed at 190°C or higher, in case of polylactic acid.

<First Method>

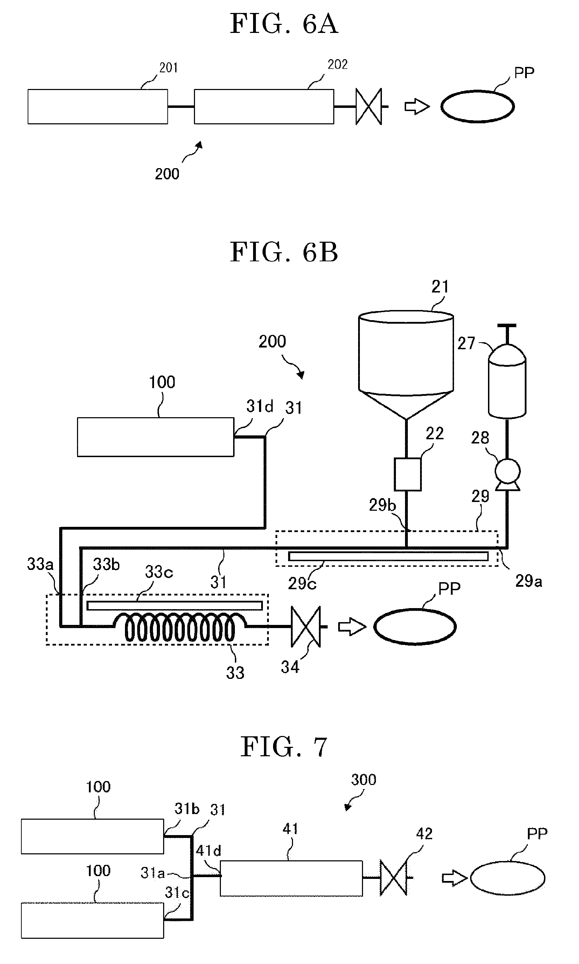

First, the first example is explained with reference to FIGs. 6A and 6B. FIGs. 6A and 6B are schematic diagrams illustrating a complex production system for use in the first method. The first method contains a second polymerization, which contains continuously bringing a first polymer obtained through ring-opening polymerization of a first ring-opening polymerizable monomer in the polymerization step (first polymerization step) of the first embodiment, and a second ring-opening polymerizable monomer into contact with each other to polymerize the first polymer and the second ring-opening polymerizable monomer. Specifically, a polymer is generated in accordance with the production method of the first embodiment in System 1 (the reference 201 in the drawing) in the complex production system 200 of FIG. 6A, and the obtained polymer P and the newly introduced second ring-opening polymerizable monomer are brought into contact with each other in System 2 (the reference 202 in the drawing) to polymerize in the presence of a compressive fluid, to thereby produce a complex product PP as an intermediate polymer. Note that, a complex product PP having three or more segments may be obtained by tandemly providing systems identical to System 2 in the complex production system 200 of FIG. 6A.

Subsequently, a specific example of the complex production system 200 is explained with reference to FIG. 6B. The complex production system 200 contains a polymerization reaction device 100 identical to the one used in the first embodiment, tanks (21, 27), a measuring feeder 22, a measuring pump 28, a contact section 29, a reaction section 33, and a pressure control valve 34.

In the complex production system 200, the reaction section 33 is composed of a tube or tube-shaped device, which has a polymer inlet 33a, from which a plurality of polymers are introduced, at one end, and a complex outlet, from which a complex obtained by mixing the plurality of polymers is discharged, at the other end. The polymer inlet 33a of the reaction section 33 is connected to an outlet of the polymerization reaction device 100 with a pressure resistance pipe 31. The outlet of the polymerization reaction device 100 means an edge of the pipe 30 or cylinder of the reaction section 13, or an outlet of the measuring pump 14 (see FIG. 3), or the pressure control valve 16 (see FIG. 4). In any case, the polymer P generated in each polymerization reaction device 100 can be supplied to the reaction section 33 in the dissolved or melted state, without returning to ambient pressure.

The tank 21 is configured to store the second ring-opening polymerizable monomer. Note that, in the first method, the second ring-opening polymerizable monomer is an optical isomer of the ring-opening polymerizable monomer stored in the tank 1. The tank 27 is configured to store a compressive fluid. The compressive fluid stored in the tank 27 is not particularly limited, but it is preferably the same to the compressive fluid stored in the tank 7 in order to proceed to the polymerization reaction uniformly. Note that, the tank 27 may store gas or a solid that is transformed into a compressive fluid upon application of heat or pressure during the process for supplying to the contact section 29, or within the contact section 29. In this case, the gas or solid stored in the tank 27 is transformed in the state of (1), (2), or (3) of FIG. 2 in the contact section 29 upon application of heat or pressure.

The measuring feeder 22 is configured to measure the second ring-opening polymerizable monomer stored in the tank 21 and to continuously supply the measured second ring-opening polymerizable monomer to the contact section 29. The measuring pump 28 is configured to continuously supply the compressive fluid stored in the tank 27 to the contact section 29 at a constant flow rate under constant pressure.

The contact section 29 is composed of a pressure resistant device or tube, which is configured to continuously bring the second ring-opening polymerizable monomer supplied from the tank 21 and the compressive fluid supplied from the tank 27 into contact with each other to dissolve or melt the raw materials. The contact section 29 has an inlet 29a, from which the compressive fluid supplied from the tank 27 by the measuring pump 28 is supplied, and an inlet 29b, from which the second ring-opening polymerizable monomer supplied from the tank 21 by the measuring feeder 22 is introduced. Moreover, the contact section 29 is equipped with a heated 29c configured to heat the supplied second ring-opening polymerizable monomer and compressive fluid. Note that, in the present embodiment, the one identical to the contact section 9 is used as the contact section 29.

The reaction section 33 is composed of a pressure resistant device or tube for polymerize the polymer P as an intermediate product, which is obtained by polymerization performed in the polymerization reaction device 100, and is in the dissolved or melted state, and the second ring-opening polymerizable monomer, which has been dissolved or melted in the contact section 29. The reaction section 33 has an outlet 33a, from which the dissolved or melted polymer P as the intermediate product is introduced into the tube, and an inlet 33b, from which the dissolved or melted second ring-opening polymerizable monomer is introduced into the tube. Moreover, the reaction section 33 is equipped with a heater 33c configured to heat the fed polymer P and second ring-opening polymerizable monomer. Note that, in the present embodiment, the one identical to the reaction section 13 is used as the reaction section 33. The pressure control valve 34, which is one example of a complex outlet, is configured to discharge the complex product PP (intermediate polymer) polymerized in the reaction section 33 out of the reaction section 33 by utilizing a pressure difference between inside and outside the reaction section 33.

In the first method, a ring-opening polymerizable monomer (e.g., L-lactide) is polymerized in the reaction section 13, and after completing the reaction quantitatively, an optical isomer ring-opening polymerizable monomer (e.g., D-lactide), which is one example of the second ring-opening polymerizable monomer, is added to the reaction section 33, and a polymerization reaction is further performed. As a result, a stereo block copolymer is obtained. This method is very effective, as a reaction can be carried out at temperature equal to or lower than the melting point of the ring-opening polymerizable monomer with a small amount of the ring-opening polymerizable monomer residues, so that racemization is rarely caused, and a polymer product can be obtained through a reaction of one stage.

<Second Method>

Subsequently, the second method is explained with reference to FIG. 7. FIG. 7 is a schematic diagram illustrating a complex production system for use in the second method. The second method further contains a blending step, which contains continuously blending two or more polymers including the polymer obtained in the polymerization step of the first embodiment, in the presence of the compressive fluid. As a result, a complex product PP as an intermediate polymer is produced. A plurality of polymers are, for example, polymers obtained by polymerizing ring-opening polymerizable monomers which are optical isomers to each other. The two or more polymers preferably contain a first polymer obtained through ring-opening polymerization of the first ring-opening polymerizable monomer, and a second polymer obtained through ring-opening polymerization of the second ring-opening polymerizable monomer, where the first ring-opening polymerizable monomer and the second ring-opening polymerizable monomer are optical isomers to each other.

The complex production system 300 contains a plurality of the polymerization reaction devices 100, a blending device 41, and a pressure control valve 42.

In the complex production system 300, the polymer inlet 41a of the blending device 41 is connected to outlets (31b,31c) of the polymerization reaction devices 100 with a pressure resistant pipe 31. The outlet of the polymerization reaction device 100 means an edge of pipe 30 or cylinder of the reaction section 13, or an outlet of the measuring pump 14 (see FIG. 3), or the pressure control valve 16 (see FIG. 4). In any case, the polymer P generated in each polymerization reaction device 100 can be supplied to the reaction section 33 in the dissolved or melted state, without returning to ambient pressure. As a result, the viscosity of each polymer P is reduced in the presence of the compressive fluid, and therefore two or more polymer P can be blended at lower temperature in the blending device 41. Note that, FIG. 7 illustrates an example where the two polymerization reaction devices 100 are provided parallel by providing one connector 31a to the pipe 31, but three or more polymerization reaction devices 100 may be provided parallel by providing a plurality of connectors.

The blending device 41 is not particularly limited, provided that it is capable of blending a plurality of polymers supplied from the polymerization reaction devices 100. Examples of the blending device include a blending device equipped with a stirring device. As for the stirring device, preferred are a single screw stirring device, a twin-screw stirring device where screws are engaged with each other, a biaxial mixer containing a plurality of stirring elements which are engaged or overlapped with each other, a kneader containing spiral stirring elements which are engaged with each other, and a static mixer. The temperature for mixing the polymers in the blending device 41 (blending temperature) can be set in the same manner as the polymerization reaction in the reaction section 13 of each polymerization reaction device 100. Note that, the blending device 41 may be equipped with a system for separately supplying the compressive fluid to the polymers to be mixed. The pressure control valve 42, which is an example of the complex outlet, is a device for controlling the flow rate of the complex product PP (intermediate polymer) obtained by blending the polymers in the blending device 41.

In the second method, L-form and D-form monomers (e.g., lactide) are polymerized in the compressive fluid in the respective polymerization reaction device 100, in advance. Further, the polymers obtained through polymerization are blended in the compressive fluid to obtain a stereo complex (blending step). The polymer, such as polylactic acid, is typically often decomposed as it is reheated to temperature equal to or higher than the melting point, even in the case where an amount of the ring-opening polymerizable monomer residues is extremely low. The second method is effective, because racemization or thermal deterioration can be prevented similarly to the first method, by blending the low viscous polylactic acid, which has been melted in the compressive fluid, at temperature equal to or lower than the melting point.

Note that, in the first method and the second method, examples where a stereo complex is produced by polymerizing each of the ring-opening polymerizable monomers, which are optical isomers to each other. The ring-opening polymerizable monomers for use in the present embodiment are not necessarily optical isomers to each other. Moreover, it is also possible to mix block copolymers each forming a stereo complex, by combining the first method and the second method.

<Extraction Device and Extraction Method of Batch System>

The extraction device of the batch system for performing the extraction step of the batch system is appropriately selected depending on the intended purpose without any limitation, and preferable examples thereof include a polymerization reaction device 400 of a batch system, illustrated in FIG. 5.

The extraction method of the batch system using the polymerization reaction device 400 is explained. In the polymerization reaction device 400, the intermediate polymer is brought into contact with, and melted in the compressive fluid having a density of 230 kg/m$^3$ or greater at temperature lower than the melting point of the intermediate polymer at a ratio (a mass of the intermediate polymer/a mass of the compressive fluid) of 0.05 to 10, where the ratio is a ratio of the intermediate polymer to the compressive fluid, to dissolve the low-molecular-weight compound contained in the intermediate polymer into the compressive fluid, to thereby extract the low-molecular-weight compound. In this case, first, the measuring pump 408 is operated and the valves (421, 422) are open to supply the compressive fluid stored in the tank 407 to the reaction vessel 413, without passing through the addition pot 411. As a result, the intermediate polymer, which has been accommodated in the reaction vessel 413 in advance, and the compressive fluid supplied from the tank 407 are brought into contact with each other in the reaction vessel 413, and are stirred by the stirring device, to thereby melt the intermediate polymer. At the same time to this, the low-molecular-weight compound contained in the intermediate polymer is dissolved in the compressive fluid at the predetermined temperature. Thereafter, the valve 432 is open to reduce the pressure so that the compressive fluid is removed. As a result, the low-molecular-weight compound contained in the intermediate polymer is separated from the intermediate polymer, together with the compressive fluid. In the manner as described above, a polymer (polymer product) obtained by removing the low-molecular-weight compound from the intermediate polymer can be attained.

Note that, in the extraction step of the batch system, a conventional polymer product, or the intermediate polymer, which is generated in the polymerization step and taken out from the polymerization reaction device, may be used as the intermediate polymer. However, it is preferred that the intermediate polymer generated in the polymerization step be subjected to extraction as it is without taking out from the polymerization reaction device. In this manner, the number of the production steps can be reduced, and the polymer production time can be shortened.

Among them, preferred is performing extraction on the intermediate polymer generated in the supercritical polymerization step as it is without taking out from the polymerization reaction device, as the affinity of the intermediate polymer to the compressive fluid is high, and the intermediate polymer can be efficiently melted in the following extraction step.

A method for performing extraction on the intermediate polymer generated in the supercritical polymerization method as it is without taking out from the polymerization reaction device is appropriately selected depending on the intended purpose without any limitation. Examples thereof include a method, which contains opening valve 432 after the polymerization reaction to gradually cool inside the reaction vessel, followed by reducing the pressure to remove excess lactide and catalyst, to thereby provide the obtained intermediate polymer to the following extraction step without taking the intermediate polymer from the reaction vessel 413.

<Extraction Device and Extraction Method of Continuous System>

As for a method for performing the extraction step of the continuous system, for example, preferred is a method, which uses t the polymerization reaction device 400 of the batch system of FIG. 5, as the extraction device, uses System 1 as the polymerization reaction device and System 2 as the extraction device in the continuous type complex production system 200 illustrated in FIGs. 6A and 6B where the compressive fluid is continuously supplied and passed through, and contains continuously supplying the compressive fluid to the extraction device to pass through the compressive fluid.

Note that, in the extraction step of the continuous system, a conventional polymer product, or the intermediate polymer, which is generated in the polymerization step and taken out from the polymerization reaction device, may be used as the intermediate polymer. However, it is preferred that the intermediate polymer generated in the polymerization step be subjected to extraction as it is without taking out from the polymerization reaction device. In this manner, the number of the production steps can be reduced, and the polymer production time can be shortened.

Among them, preferred is performing extraction on the intermediate polymer generated in the supercritical polymerization step as it is without taking out from the polymerization reaction device, as the affinity of the intermediate polymer to the compressive fluid is high, and the intermediate polymer can be efficiently melted in the following extraction step.

A method for performing extraction on the intermediate polymer generated in the supercritical polymerization method as it is without taking out from the polymerization reaction device is appropriately selected depending on the intended purpose without any limitation. Examples thereof include a method, which uses System 1 as the polymerization reaction device and System 2 as the extraction system in the continuous system complex production system 200 illustrated in FIGs. 6A and 6B, and contains continuously supplying the compressive fluid to the extraction device to pass through the compressive fluid.

Examples

The present invention is more specifically explained through Examples thereinafter, but Examples shall not be construed to as limit the scope of the present invention.

Various properties of intermediate polymers used in Examples and Comparative Examples and polymer products obtained in Examples and Comparative Examples were determined in the following manners.

<Molecular Weight of Polymer>

A molecular weight of a polymer was measured by gel permeation chromatography (GPC) under the following conditions.

Apparatus: GPC-8020 (product of TOSOH CORPORATION)
Column: TSK G2000HXL and G4000HXL (product of TOSOH CORPORATION)

Temperature: 40°C
Solvent: Tetrahydrofuran (THF)
Flow rate: 0.5 mL/min

A sample (1 mL) having a concentration of 0.5% by mass was injected to measure a molecular weight distribution of a polymer under the above conditions. A weight average molecular weight (Mw) of a toner was calculated from the obtained molecular weight distribution using a molecular weight calibration curve obtained using a monodisperse polystyrene standard sample.

In the case where the polymer did not dissolve in the solvent, the measurement was performed after making the polymer amorphous under the following conditions.

The sufficiently dried polymer was sandwiched with aluminum plates, and placed on a heat press of 275°C to heat for 90 seconds, followed by pressing and retaining for 1 minutes at 2 MPa. Just after the heating and pressing, the polymer was transferred on a press in which water was circulated to thereby cool the polymer, to thereby produce a clear amorphous press sheet.

<Amount of Ring-Opening Polymerizable Monomer Residues and Amount of Catalyst Residues>

An amount of ring-opening polymerizable monomer residues in a polymer product (polylactic acid) was determined in accordance with a measuring method of a lactide amount described in "Voluntary standard associated with food packaging formed of a synthetic resin, such as polyolefine, the revised 3rd edition, supplemented in June, 2004, Part 3, Hygienic test method, p 13." Specifically, a polymer product, such as polylactic acid, was homogeneously dissolved in dichloromethane. To the resulting solution, a mixed solution of acetone and cyclohexane was added, to re-deposit the polymer product. The supernatant liquid as obtained was provided to a gas chromatograph (GC) equipped with a flame ionization detector (FID) to separate monomer residues (lactide in case of polylactic acid) and catalyst residues. The separated monomer residues and catalyst residues were subjected quantitative determination by an internal reference method, to thereby measure an amount of the monomer residues (an amount of ring-opening polymerizable monomer residues) in the polymer product, and an amount of the catalyst residues in the polymer product. Note that, the measurement of the gas chromatography (GC) can be carried out under the following conditions. The term "ppm" depicted in each table denotes a mass fraction.

(Measuring Conditions of GC)

Column: capillary column
Agilent J&W GC Column-DB-17ms (manufactured by Agilent Technologies, 30 m (length) $\times$ 0.25 mm (inner diameter), film thickness: 0.25 $\mu$m)
Internal Reference: 2,6-dimethyl-$\gamma$-pyrone
Column flow rate: 1.8 mL/min
Column temperature: 50°C for 1 minute, heating at a constant heating speed of 25°C to 320°C, retaining temperature at 320°C for 5 minutes.
Detector: Flame ionization (FID)

A metal catalyst was measured by ICP optical emission spectrometry (inductively coupled plasma high frequency atomic emission spectrometry) under the following conditions. Based on the measurement result thereof, an amount of catalyst residues was determined.

Device: ICP optical emission spectrometer (ICP-OES/ICP-AES)

SPS5100 type, manufactured by Hitachi High-Tech Science Corporation

After heating and decomposing a sample (polymer product) with sulfuric acid and nitric acid, the volume of the resultant was fixed using ultra pure water, to thereby prepare a test liquid. A quantitative analysis of Sn in the test liquid was performed by ICP-AES.

<Yellow Index (YI Value)>

The obtained polymer product was formed into a resin pellet having a thickness of 2 mm, and a YI value thereof was measured by means of an SM color computer (manufactured by Suga Test Instruments Co., Ltd.) in accordance with JIS-K7103.

<Measurement of Melting Point of Polymer>

A melting point (°C) was measured by DSC under the following conditions in accordance with JIS-K7121. As for the properties of the polymer product after extraction, a melting point before heating to 200°C (a melting point at the first heating) and melting point elevated temperature after heating to 200°C [(melting point at second heating)-(melting point at first heating)] were determined.

Device: DSC (Q2000, manufactured by TA Instruments Japan Inc.)

An aluminum sealed pan filled with a sample (5 mg to 10 mg) was provided to the following measurement flow.

Cooling: cooling to -15°C at 10 °C/min, after reaching -15°C, retaining the temperature for 5 minutes
First Heating: heating from -15°C to 200°C at 10 °C/min, after reaching 200°C, maintaining the temperature for 10 minutes
Cooling: cooling to -15°C at 10 °C/min, after reaching -15°C, the temperature was maintained for 5 minutes
Second heating: heating from -15°C to 200°C at 10 °C/min

(Example 1-1)

<Reaction Device>

Polymerization and extraction of an intermediate polymer were performed by means of a polymerization reaction device 400 of a batch system, which was as illustrated in FIG. 5. The structure of the polymerization reaction device 400 is described below.

Tank 407: Carbonic acid gas cylinder
Addition pot 411: A 1/4-inch SUS316 pipe was sandwiched with valves 423 and 424, and the resultant was used as an addition pot.
Reaction vessel 413: 100 mL SUS316 pressure resistant vessel

<Polymerization Step: Production of Intermediate Polymer by Solution Polymerization>

To the reaction vessel 413, 9 parts by mass of L-lactide, 1 part by mass of D-lactide, 0.01 parts by mass (0.1 mol% relative to 100 mol% of the monomers) of lauryl alcohol serving as an initiator, which were 80 g in total, were added. The reaction device was purged with nitrogen gas, and 30 parts by mass of dichloromethane was added thereto, to dissolve the raw materials with stirring. After controlling the temperature of the internal system to 40°C, an organic catalyst (1,8-diazabicyclo[5.4.0]undec-7-ene(DBU) in an amount of 0.01 parts by mass, which was 0.1 mol% relative to 100 mol% of the monomers), which had been stored in advance in the addition pot 411, was added from the addition pot to the reaction vessel. Thereafter, the resulting mixture was allowed to react for 5 hours. After completing the reaction, dichloromethane was distilled from inside the reaction vessel, followed by heating the inner atmosphere of the reaction device to 100°C at the reduced pressure of 133.32 Pa (1.0 mmHg), to thereby remove excess lactide and catalyst. Thereafter, the valve 432 was open to gradually return the temperature and pressure inside the reaction vessel to room temperature and ambient pressure. Three hours later, a polymer product (polylactic acid) in the reaction vessel was taken out, to thereby obtain an intermediate polymer of Example 1-1.
The properties of the obtained intermediate polymer were measured in the aforementioned manners. The results are presented in Table 1 as the properties just after the polymerization.

<Extraction Step (Batch System)>

All of the obtained intermediate polymer (60 g) was placed in the reaction device 413, and heated to 180°C, followed by charging the reaction device with supercritical carbon dioxide (140°C, 30 MPa, 520 kg/m$^3$) using a measuring pump 408. After bringing the intermediate polymer into contact with the compressive fluid and melting the intermediate polymer with the compressive fluid with stirring for 30 minutes, the temperature of the intermediate polymer was cooled to 140°C, and was further stirring for 30 minutes, to thereby extract a low-molecular-weight compound contained in the intermediate polymer. Thereafter, the valve 432 was open to reduce the pressure, to thereby remove the low-molecular-weight compound. Subsequently, fresh supercritical carbon dioxide (140°C, 30 MPa, 520 kg/m$^3$) was supplied and the extraction was again performed twice. The extraction was performed three times in total. Thereafter, the valve 432 was open, to gradually return the temperature and pressure inside the reaction vessel to room temperature and ambient pressure. Three hours later, a polymer product (polylactic acid) in the reaction vessel was taken out, to thereby obtain a polymer product of Example 1-1.

The properties of the obtained polymer product were measured in the aforementioned manners. The results are presented in Table 1 as the properties after the extraction.

Moreover, a blending ratio = intermediate polymer mass /compressive fluid mass in Table 1 was calculated with the following formulae.

Spatial volume of supercritical carbon dioxide: 100 mL-60 g/1.25 (specific gravity of the intermediate polymer) = 52 mL
Mass of supercritical carbon dioxide: 52 mL × 520/1,000 (specific gravity of carbon dioxide at 140°C, 30 MPa) = 27.0
In case of the batch system
Blending ratio: 27.0 g × 3 (times as performed)/(60g)=1.4

(Example 1-2)

An intermediate polymer and a polymer product of Example 1-2 were produced in the same manner as in Example 1-1, provided that, as depicted in Table 1, the polymerization time in the polymerization step was changed from 5 hours to 2 hours, and supercritical carbon dioxide (140°C, 30 MPa, 520 kg/m$^3$) used in the extraction step was replaced with super critical carbon dioxide (100°C, 30 MPa, 662 kg/m$^3$). The properties of the obtained intermediate polymer and polymer product were measured. The results are presented in Table 1.

(Example 1-3)

<Polymerization Step: Production of Intermediate Polymer by Solution Polymerization>

To a reaction vessel 413, 9 parts by mass of L-lactide, 1 part by mass of D-lactide, and 0.1 mol% of lauryl alcohol serving as an initiator relative to 100 mol% of monomers were added, and the resulting mixture was heated with stirring to thereby melt. When the temperature of the lactide reached 150°C, a metal catalyst (tin octylate in an amount of 0.1 parts by mass relative to 100 parts by mass of the monomers), which had been stored in the addition pot 411, was added to the reaction vessel from the addition pot. Thereafter, the resulting mixture was allowed to react for 2 hours. After completing the reaction, the pressure was reduced to 133.32 Pa (1.0 mmHg), to thereby remove excess lactide. Thereafter, the valve 432 was open, to gradually return the temperature and pressure inside the reaction vessel to room temperature and ambient pressure. Three hours later, a polymer product (polylactic acid) in the reaction vessel was taken out, to thereby obtain an intermediate polymer of Example 1-3.

The properties of the obtained intermediate polymer were measured in the aforementioned manners. The results are presented in Table 1 as the properties just after the polymerization.

<Extraction Step>

A polymer product of Example 1-3 was produced in the same manner as in Example 1-1, provided that the intermediate polymer of Example 1-3 was used. The properties of the obtained intermediate polymer and polymer product were measured. The results are presented in Table 1.

(Example 1-4)

<Polymerization Step: Production of Intermediate Polymer by Supercritical Polymerization>

To a 100 mL reaction vessel 413, L-lactide (90 parts by mass), D-lactide (10 parts by mass), and lauryl alcohol serving as an initiator (1.00 mol% relative to 100 mol% of monomers) were measured and added so that a mass of the entire system was to be 60 g. After heating the resulting mixture to 110°C, the reaction vessel was charged with supercritical carbon dioxide (60°C, 10 MPa) by a measuring pump 408, and the resultant was stirred for 10 minutes to dissolve the raw materials. After adjusting the temperature inside the system to 60°C, a pass of the compressive fluid was changed to a pass via the addition pot 411. As a result of this, an organic catalyst (DBU, in an amount of 0.1 parts by mass relative to 100 parts by mass of the monomers), which had been stored in the addition pot in advance, was pushed out and added into the reaction vessel from the addition pot at the set pressure higher than the pressure inside the reaction vessel by 1 MPa. Thereafter, the resulting mixture was allowed to react for 2 hours. After completing the reaction, the valve 432 was open to gradually return the temperature and pressure inside the reaction vessel to room temperature and ambient pressure. Three hours later, a polymer product (polylactic acid) in the reaction vessel was taken out, to thereby obtain an intermediate polymer of Example 1-4.

The properties of the obtained intermediate polymer were measured in the aforementioned manners. The results are presented in Table 1 as the properties just after the polymerization.

<Extraction Step>

A polymer product of Example 1-4 was produced in the same manner as in Example 1-1, provided that the intermediate polymer of Example 1-4 was used, and the extraction conditions were changed as depicted in Table 1. The properties of the obtained intermediate polymer and polymer product were measured. The results are presented in Table 1

(Examples 1-5 to 1-7)

An intermediate polymer and a polymer product of each of Examples 1-5 to 1-7 were produced in the same manner as in Example 1-4, provided that the polymerization conditions and extraction conditions were changed as depicted in Table 1. The properties of the obtained intermediate polymers and polymer products were measured. The results are presented in Table 1.

(Example 1-8)

<Polymerization Step: Production of Intermediate Polymer by Solution Polymerization>

To a 100 mL reaction vessel 413, L-lactide (90 parts by mass), D-lactide (10 parts by mass), and lauryl alcohol serving as an initiator (1.00 mol% relative to 100 mol% of monomers) were measured and added so that a mass of the entire system was to be 60 g. After heating the resulting mixture to 110°C, the reaction vessel was charged with supercritical carbon dioxide (60°C, 10 MPa) by a measuring pump 408, and the resultant was stirred for 10 minutes to dissolve the raw materials. After adjusting the temperature inside the system to 150°C, a pass of the compressive fluid was changed to a pass via the addition pot 411. As a result of this, a metal catalyst (tin octylate in an amount of 0.10 parts by mass relative to 100 parts by mass of the monomers), which had been stored in the addition pot in advance, was pushed out and added into the reaction vessel from the addition pot at the set pressure higher than the pressure inside the reaction vessel by 1 MPa. Thereafter, the resulting mixture was allowed to react for 2 hours. The resultant was provided to the following extraction step, without taking the obtained intermediate polymer from the reaction vessel.

<Extraction Step>

A polymer product of Example 1-8 was obtained in the same manner as in Example 1-1, provided that the intermediate polymer of Example 1-8 was used, and the extraction conditions were changed as depicted in Table 2. The properties of the obtained intermediate polymer and polymer product were measured. The results are presented in Table 1

Moreover, a blending ratio = mass of raw materials /compressive fluid mass in Table 1 was calculated with the following formulae.

Spatial volume of supercritical carbon dioxide: 100 mL-60 g/1.25 (specific gravity of the raw materials) = 52 mL
Mass of supercritical carbon dioxide: 52 mL $\times$ 490/1,000 (specific gravity of carbon dioxide at 150°C, 30 MPa) = 25.5
Blending ratio: 25.5 g $\times$ 3 (times as performed)/(60g)=1.3

(Example 1-9)

<Polymerization Step: Production of Intermediate Polymer by Supercritical Polymerization>

An intermediate polymer of Example 1-9 was produced in the same manner as in Example 1-8, provided that the polymerization conditions were changed as depicted in Table 2. The obtained intermediate polymer was provided to the following extraction step without being taken out from the reaction vessel.

<Extraction Step (Continuous System)>

While maintaining the obtained intermediate polymer at 100°C in the reaction device 413, 2 mL of supercritical carbon dioxide (100°C, 10 MPa, 332 kg/m$^3$) was passed through over 60 minutes by the measuring pump 408, and the supercritical carbon dioxide was discharged from the valve 432 so that the internal system was maintained at 10 MPa.

The intermediate polymer was brought into contact with the compressive fluid, and unreacted monomers and catalyst contained in the intermediate polymer were dissolved in the compressive fluid, and removed through the valve 432. After completing the operation of passing the supercritical carbon dioxide, the temperature and pressure inside the reaction vessel were returned to room temperature and ambient pressure. Three hours later, a polymer product (polylactic acid) in the reaction vessel was taken out, to thereby obtain a polymer product of Example 1-9.

The properties of the obtained polymer product were measured in the aforementioned manners. The results are presented in Table 1 as the properties after the extraction.

(Examples 1-10 to 1-11)

An intermediate polymer and a polymer product of each of Examples 1-10 to 1-11 were produced in the same manner as in Example 1-9, provided that the polymerization conditions and extraction conditions were changed as depicted in Table 2. The properties of the obtained intermediate polymer and polymer product were measured. The results are presented in Table 2.

(Example 1-12)

An intermediate polymer and a polymer product of Example 1-12 were produced in the same manner as in Example 1-3, provided that the polymerization conditions and extraction conditions were changed as depicted in Table 2. The properties of the obtained intermediate polymer and polymer product were measured. The results are presented in Table 2.

(Example 1-13)

An intermediate polymer and a polymer product of Example 1-13 were produced in the same manner as in Example 1-2, provided that the extraction conditions were changed as depicted in Table 2. The properties of the obtained intermediate polymer and polymer product were measured. The results are presented in Table 2.

(Example 1-14)

An intermediate polymer and a polymer product of Example 1-14 were produced in the same manner as in Example 1-3, provided that ethanol (10 parts by mass relative to 100 parts by mass of the compressive fluid) serving as an entrainer was added to the supercritical carbon dioxide through the addition pot 411 in the extraction step. The properties of the obtained intermediate polymer and polymer product were measured. The results are presented in Table 2.

(Examples 1-15 to 1-16)

An intermediate polymer and a polymer product of each of Examples 1-15 to 1-16 were produced in the same manner as in Example 1-8, provided that the extraction was performed the number depicted in Table 3. The properties of the obtained intermediate polymers and polymer products were measured. The results are presented in Table 3.

(Comparative Example 1-1)

A polymer product of Comparative Example 1 was produced in the same manner as in Example 1-3, provided that the intermediate polymer obtained in Example 1 was subjected to the extraction step in the solid state without being melted, and the extraction was performed under the extraction conditions as depicted in Table 3. The properties of the obtained intermediate polymer and polymer products were measured. The results are presented in Table 3.

Table 1

| | | Ex. 1-1 | Ex. 1-2 | Ex. 1-3 | Ex. 1-4 | Ex. 1-5 | Ex. 1-6 | Ex. 1-7 |
|---|---|---|---|---|---|---|---|---|
| Polymerization conditions | Monomer | lactide | lactide | lactide | lactide | lactide | lactide | lactide |
| | Catalyst | DBU | DBU | tin octylate | DBU | tin octylate | tin octylate | tin octylate |
| | Polymerization time (h) | 5 | 2 | 2 | 2 | 2 | 2 | 2 |
| | Polymerization temperature (°C) | 40 | 40 | 180 | 60 | 150 | 150 | 150 |
| | Polymerization pressure | - | - | - | 10 | 20 | 50 | 20 |
| Properties just after polymerization | Mw | 50,000 | 20,000 | 210,000 | 10,000 | 220,000 | 380,000 | 220,000 |
| | Monomer residue (ppm) | 21,000 | 12,000 | 15,000 | 500 | 700 | 900 | 900 |
| | Catalyst residue (ppm) | 1,000 | 70 | 80 | 30 | 40 | 50 | 1,200 |
| Extraction conditions | Extraction temperature (°C) | 140 | 100 | 140 | 80 | 80 | 140 | 140 |
| | Extraction pressure (MPa) | 30 | 30 | 30 | 30 | 65 | 30 | 30 |
| | Extraction density of compressive fluid (kg/m³) | 520 | 662 | 520 | 750 | 930 | 520 | 520 |
| | Operation times or conditions | 3 | 3 | 3 | 3 | 3 | 3 | 3 |
| | Blending ratio | 1.4 | 1.7 | 1.4 | 2.0 | 2.4 | 1.4 | 1.4 |
| Properties after extraction | Mw | 45,000 | 16,000 | 180,000 | 8,000 | 190,000 | 330,000 | 180,000 |
| | Monomer residue (ppm) | 5,000 | 3,000 | 4,000 | 20 | 30 | 80 | 80 |
| | Catalyst residue (ppm) | 180 | 20 | 30 | 8 | 10 | 20 | 80 |
| | YI value | 14.2 | 12.8 | 9.3 | 2.2 | 3.2 | 2.9 | 2.5 |
| | Melting point before heating to 200°C (°C) | 165 | 162 | 167 | 162 | 166 | 170 | 170 |
| | Melting point elevated temperature after heating to 200°C (°C) | 3 | 6 | 4 | 5 | 4 | 4 | 4 |

Table 2

| | | Ex. 1-8 | Ex. 1-9 | Ex. 1-10 | Ex. 1-11 | Ex. 1-12 | Ex. 1-13 | Ex. 1-14 |
|---|---|---|---|---|---|---|---|---|
| Polymerization conditions | Monomer | lactide | lactide | lactide | lactide | lactide | lactide | lactide |
| | Catalyst | tin octylate | tin octylate | tin octylate | tin octylate | tin octylate | DBU | tin octylate |
| | Polymerization time (h) | 2 | 2 | 2 | 2 | 5 | 2 | 2 |
| | Polymerization temperature (°C) | 150 | 150 | 150 | 150 | 180 | 40 | 180 |
| | Polymerization pressure | 30 | 10 | 20 | 30 | - | - | - |
| Properties just after polymerization | Mw | - | - | - | - | 50,000 | 20,000 | 210,000 |
| | Monomer residue (ppm) | - | - | - | - | 21,000 | 12,000 | 15,000 |
| | Catalyst residue (ppm) | - | - | - | - | 90 | 70 | 80 |
| Extraction conditions | Extraction temperature (°C) | 150 | 100 | 140 | 140 | 140 | 100 | 140 |
| | Extraction pressure (MPa) | 30 | 10 | 20 | 30 | 15 | 30 | 30 |
| | Extraction density of compressive fluid (kg/m³) | 490 | 332 | 350 | 520 | 247 | 660 | 520 |
| | Operation times or conditions | 3 | Passing 2mL× 60min | Passing 2mL× 60min | Passing 2mL× 60min | 3 | 3 | 3 |
| | Blending ratio | 1.3 | 0.8 | 0.8 | 1.2 | 0.4 | 1.7 | 1.4 |
| Properties after extraction | Mw | 240,000 | 220,000 | 240,000 | 230,000 | 50,000 | 20,000 | 210,000 |
| | Monomer residue (ppm) | 120 | 4,000 | 800 | 120 | 9,000 | 1,000 | 2,000 |
| | Catalyst residue (ppm) | 60 | 320 | 60 | 40 | 70 | 10 | 20 |
| | YI value | 0.8 | 1.2 | 0.6 | 1.2 | 8.0 | 3.0 | 8.0 |
| | Melting point before heating to 200°C (°C) | 170 | 170 | 171 | 171 | 165 | 162 | 167 |
| | Melting point elevated temperature after heating to 200°C (°C) | 6 | 6 | 6 | 5 | 3 | 9 | 4 |

Table 3

| | | | Ex. 1-15 | Ex. 1-16 | Comp. Ex. 1-1 |
|---|---|---|---|---|---|
| Polymerization conditions | | Monomer | lactide | lactide | lactide |
| | | Catalyst | tin octylate | tin octylate | tin octylate |
| | | Polymerization time (h) | 2 | 2 | 2 |
| | | Polymerization temperature (°C) | 150 | 150 | 180 |
| | | Polymerization pressure | 30 | 30 | - |
| Properties just after polymerization | | Mw | — | — | 210,000 |
| | | Monomer residue (ppm) | — | — | 15,000 |
| | | Catalyst residue (ppm) | — | — | 80 |
| Extraction conditions | | Extraction temperature (°C) | 150 | 150 | 80 |
| | | Extraction pressure (MPa) | 30 | 30 | 30 |
| | | Extraction density of compressive fluid (kg/m³) | 490 | 490 | 750 |
| | | Operation times or conditions | 10 | 20 | 3 |
| | | Blending ratio | 4.2 | 8.5 | — |
| Properties after extraction | | Mw | 240,000 | 240,000 | 180,000 |
| | | Monomer residue (ppm) | 60 | 50 | 1,000 |
| | | Catalyst residue (ppm) | 30 | 20 | 30 |
| | | YI value | 1.2 | 1.5 | 6.0 |
| | | Melting point before heating to 200°C (°C) | 170 | 170 | 172 |
| | | Melting point elevated temperature after heating to 200°C (°C) | 5 | 5 | 0 |

(Examples 2-1 to 2-5)

An intermediate polymer and polymer product of each of Examples 2-1 to 2-5 were produced in the same manner as in Example 1-5, provided that a monomer for use, the polymerization conditions, and the extraction conditions were changed as depicted in Table 4. The properties of the obtained intermediate polymers and polymer products were measured. The results are presented in Table 4.

Table 4

| | | Ex. 2-1 | Ex. 2-2 | Ex. 2-3 | Ex. 2-4 | Ex. 2-5 |
|---|---|---|---|---|---|---|
| Polymerization conditions | Monomer | glycolide | dioxanone | caprolactone | ethylene carbonate | propylene carbonate |
| | Catalyst | tin ocrylate | tin ocrylate | tin ocrylate | tin ocrylate | tin ocrylate |
| | Polymerization time (h) | 5 | 5 | 5 | 5 | 5 |
| | Polymerization temperature (°C) | 150 | 150 | 150 | 150 | 150 |
| | Polymerization pressure | 30 | 30 | 30 | 30 | 30 |
| Properties just after polymerization | Mw | 150,000 | 130,000 | 140,000 | 140,000 | 130,000 |
| | Monomer residue (ppm) | 25,000 | 28,000 | 26,000 | 29,000 | 26,000 |
| | Catalyst residue (ppm) | 90 | 80 | 70 | 80 | 90 |
| Extraction conditions | Extraction temperature (°C) | 140 | 140 | 140 | 140 | 140 |
| | Extraction pressure (MPa) | 30 | 30 | 30 | 30 | 30 |
| | Extraction density of compressive fluid (kg/m³) | 520 | 520 | 520 | 520 | 520 |
| | Operation times | 3 | 3 | 3 | 3 | 3 |
| | Blending ratio | 1.4 | 1.4 | 1.4 | 1.4 | 1.4 |
| Properties after extraction | Mw | 150,000 | 130,000 | 140,000 | 140,000 | 130,000 |
| | Monomer residue (ppm) | 4,000 | 5,000 | 5,000 | 6,000 | 6,000 |
| | Catalyst residue (ppm) | 40 | 50 | 40 | 50 | 50 |
| | YI value | 9 | 10 | 8 | 9 | 9 |
| | Melting point before heating to 200°C (°C) | 224 | 102 | 58 | 221 | 227 |
| | Melting point elevated temperature after heating to 200°C (°C) | 3 | 2 | 3 | 3 | 4 |

(Example 3-1)

Polymerization and extraction of the intermediate polymer (copolymer) of Example 3-1 were performed by means of the polymerization reaction device 400 illustrated in FIG. 5.

<Polymerization Step: Production of Intermediate Polymer by Solution Polymerization>

To a reaction vessel 413, 10 parts by mass of L-lactide, and 0.01 parts of lauryl alcohol serving as an initiator relative to 100 parts by mass of the monomer were added. The reaction device was purged with nitrogen gas, and 30 parts by mass of dichloromethane was added thereto, followed by dissolving the monomer with controlling the internal system temperature to 40°C. Thereafter, an organic catalyst (DBU in an amount 0.1 parts by mass relative to 100 parts by mass of the monomer), which had been stored in the addition pot 411 in advance, was added from the addition pot to the reaction vessel. Thereafter, the resulting mixture was allowed to react for 5 hours. Subsequently, 10 parts by mass of D-lactide was added to the reaction vessel, and the resulting mixture was allowed to react for 5 hours, to thereby polymerize the polymer (poly L-lactic acid) as an intermediate product, and the second ring-opening polymerizable monomer (D-lactide). After completing the reaction, dichloromethane was distilled from inside the reaction vessel, followed by heating the inner atmosphere of the reaction device to 100°C at the reduced pressure of 133.32 Pa (1.0 mmHg), to thereby remove excess lactide and catalyst. Thereafter, the valve 432 was open to gradually return the temperature and pressure inside the reaction vessel to room temperature and ambient pressure. Three hours later, a polymer product (polylactic acid) in the reaction vessel was taken out, to thereby obtain an intermediate polymer of Example 3-1.

The properties of the obtained intermediate polymer were measured in the aforementioned manners. The results are presented in Table 5 as the properties just after the polymerization.

<Extraction Step>

A polymer product of Example 3-1 was produced in the same manner as in Example 1-1, provided that the intermediate polymer of Example 3-1 was used, and the extraction conditions were changed as depicted in Table 5. The properties of the obtained intermediate polymer and polymer product were measured. The results are presented in Table 5.

(Example 3-2)

<Reaction Device>

Polymerization and extraction of the intermediate polymer (copolymer) of Example 3-2 were performed by means of a complex production system 200 illustrated in FIGs. 6A and 6B. The device of FIGs. 6A and 6B is a device, in which two polymerization reaction devices 100, each illustrated in FIG. 3, are connected parallel as a polymerization device of System 1, and a polymerization device of System 2. The structure of the complex production system 200 is described below.

Tank 1, Metering Feeder 2:

Plunger pump NP-S462, manufactured by Nihon Seimitsu Kagaku Co., Ltd.

Tank 3, Metering Feeder 4: Not used in Example 3-2
Tank 5, Metering Pump 6: Not used in Example 3-2
Tank 7: Carbonic acid gas cylinder
Tank 27: Carbonic acid gas cylinder
Tank 21, Metering Feeder 22:

Plunger pump NP-S462, manufactured by Nihon Seimitsu Kagaku Co., Ltd.

Tank 11, Metering Pump 12:

Intelligent HPLC pump (PU-2080), manufactured by JASCO Corporation Contact section 9: A biaxial stirring device equipped with screws engaged with each other.
Inner diameter of cylinder: 30 mm
Identical biaxial rotational directions
Rotational speed: 30 rpm

Contact section 29: A biaxial stirring device equipped with screws engaged with each other.

Inner diameter of cylinder: 30 mm
Identical biaxial rotational directions
Rotational speed: 30 rpm

Reaction section 13: Biaxial kneader

Inner diameter of cylinder: 40 mm
Identical biaxial rotational directions
Rotational speed: 60 rpm

Reaction section 33: Biaxial kneader

Inner diameter of cylinder: 40 mm
Identical biaxial rotational directions
Rotational speed: 60 rpm

<Polymerization Step: Production of Intermediate Polymer (Copolymer) by Supercritical Polymerization>

The measuring feeder 2 was operated to supply the mixture of L-lacted and lauryl alcohol in the melted state in the tank 1 to a container of the biaxial stirring device of the contact section 9 at the constant flow rate of 4 g/min (the feeding speed of the raw materials). The measuring pump 8 was operated to continuously supply carbonic acid gas in the tank 7 to the container of the biaxial stirring device so that the amount of the carbonic acid gas was to be 5 parts by mass relative to 100 parts by mass of the supplied amount of the raw materials (L-lactide and lauryl alcohol). Specifically, the feeding ratio was set as follows:

$$\text{Feeding ratio} = [\text{feeding speed of raw materials (g/min)}]/[\text{feeding speed of compressive fluid (g/min)}] = 100/5 = 20$$

As described above, each of the raw materials (L-lactide and lauryl alcohol) was continuously brought into contact with the compressive fluid to melt the raw materials.

Each raw material melted in the biaxial stirring device was sent to the biaxial kneader of the reaction section 13 by the liquid feeding pump 10. Meanwhile, the measuring pump 12 was operated to supply a polymerization catalyst (DBU), which had been stored in the tank 11, into the biaxial kneader so that a mass ratio of the supplied amount of the L-lactide to the amount of the catalyst was to be 99.99:0.01. In the manner as described, L-lactide was polymerizaed through ring-opening polymerization in the presence of DBU in the biaxial kneader.

Moreover, the measuring feeder 22 was operated to supply D-lactide as the second ring-opening polymerizable monomer in the tank 21 to the container of the biaxial stirring device of the contact section 29 at a constant rate of 4 g/min (the feeding speed of the raw materials). Furthermore, the measuring pump 28 was operated to continuously supply carbonic acid gas in the tank 27 to the container of the biaxial stirring device of the contact section so that the amount of the carbonic acid gas was to be 5 parts by mass relative to 100 parts by mass of the supplied amount of D-lactide (feeding ratio = 20). In the manner as described, D-lactide was continuously brought into with the compressive fluid in the biaxial stirring device to melt D-lactide.

The polymer (poly L-lactide) polymerized and obtained as a melted intermediate product in the reaction section 13 and the melted D-lactide in the contact section 29 were introduced into the biaxial kneader of the reaction section 33. Then, the polymer (poly L-lactide) as the intermediate product and the second ring-opening polymerizable monomer (D-lactide) were polymerized in the biaxial kneader.

Note that, in Example 3-2, the internal pressure of the biaxial stirring device of the contact section 9, and the internal pressure of the biaxial kneader of the reaction section (13,33) were each set to 30 MPa by adjusting the opening degree of the pressure control valve 34. The temperature inside the container of the biaxial stirring device of the contact section (9, 29) was 100°C at the inlet thereof, and 60°C at the outlet thereof. The temperature of the biaxial kneader of the reaction section (13, 33) was 60°C at both the inlet and outlet thereof. Moreover, the average retention time of the raw materials each in the biaxial stirring device of the contact section 9 and the biaxial kneader of the reaction section (13, 33) was controlled to 20 minutes by adjusting the pipeline system or length of the biaxial stirring device of the contact section 9 and the biaxial kneader of the reaction section (13, 33).

The pressure control valve 34 was provided at the edge of the biaxial kneader of the reaction section 33, and the intermediate polymer (copolymer) was continuously discharged from the pressure control valve 34. The properties of the obtained intermediate polymer were measured in the aforementioned manners. The results are presented in Table 5 as the properties just after the polymerization.

<Extraction Step>

A polymer product of Example 3-2 was produced in the same manner as in Example 1-1, provided that the intermediate polymer of Example 3-2 was used, and the extraction conditions were changed as depicted in Table 5. The properties of the obtained intermediate polymer and polymer product were measured. The results are presented in Table 5.

(Examples 3-3 to 3-4)

An intermediate polymer and polymer product of each of Examples 3-3 to 3-4 were produced in the same manner as in Example 3-2, provided that the polymerization conditions and the extraction conditions were changed as depicted in Table 5. The properties of the obtained intermediate polymers and polymer products were measured. The results are presented in Table 5.

Note that, in Table 5, the numerical value "97" depicted as the melting point before heating to 200°C in Example 3-4 indicates a melting point of a block polymer segment derived from caprolactone, and the numerical value "189" is a melting point of a block polymer segment derived from L-lactide. Moreover, the two numerical values for the melting point elevated temperature after heating to 200°C are respectively elevated temperature of the block polymer segment derived from caprolactone, and that of the block polymer segment derived from L-lactide.

Table 5

| | | Ex. 3-1 | Ex. 3-2 | Ex. 3-3 | Ex. 3-4 |
|---|---|---|---|---|---|
| Polymerization conditions | First monomer | L-lactide | L-lactide | L-lactide | L-lactide |
| | Second monomer | D-lactide | D-lactide | D-lactide | caprolactone |
| | Catalyst | DBU | DBU | tin octylate* | TBD |
| | Polymerization time (h) | 5 | 2 | 2 | 2 |
| | Polymerization temperature (°C) | 40 | 60 | 150 | 50 |
| | Polymerization pressure(MPa) | - | 30 | 50 | 30 |
| Properties just after polymerization | Mw | 130,000 | 190,000 | 460,000 | 180,000 |
| | Monomer residue (ppm) | 29,000 | 700 | 900 | 900 |
| | Catalyst residue (ppm) | 90 | 80 | 60 | 70 |
| Extraction conditions | Extraction temperature (°C) | 140 | 140 | 80 | 140 |
| | Extraction pressure (MPa) | 30 | 15 | 65 | 30 |
| | Extraction density of compressive fluid (kg/m³) | 520 | 247 | 930 | 520 |
| | Times | 3 | 3 | 3 | 3 |
| | Blending ratio | 1.4 | 0.6 | 2.4 | 1.4 |
| Properties after extraction | Mw | 130,000 | 190,000 | 460,000 | 180,000 |
| | Monomer residue (ppm) | 4,000 | 200 | 20 | 70 |
| | Catalyst residue (ppm) | 40 | 30 | 10 | 20 |
| | YI value | 8 | 5 | 2 | 2 |
| | Melting point before heating to 200°C (°C) | 192 | 196 | 199 | 97/169 |
| | Melting point elevated temperature after heating to 200°C (°C) | 3 | 6 | 5 | 8/8 |

The embodiments of the present invention are, for example, as follows:

<1> A method for producing a polymer, containing:
bringing an intermediate polymer, which has been obtained through ring-opening polymerization of a ring-opening polymerizable monomer, into contact with, and melting the intermediate polymer in a compressive fluid having a density of 230 kg/m³ or greater, at temperature lower than a melting point of the intermediate polymer, at a ratio of 0.05 to 10, to dissolve a low-molecular-weight compound contained in the intermediate polymer in the compressive fluid, to thereby extract the low-molecular-weight compound,
wherein the ratio is a ratio of a mass of the intermediate polymer to a mass of the compressive fluid.

<2> A method for producing a polymer, including:

continuously bringing an intermediate polymer, which has been obtained through ring-opening polymerization of a ring-opening polymerizable monomer, into contact with, and melting the intermediate polymer in a compressive fluid having a density of 230 kg/m$^3$ or greater, at temperature lower than a melting point of the intermediate polymer, at a ratio of 0.05 to 10, to dissolve a low-molecular-weight compound contained in the intermediate polymer in the compressive fluid, to thereby extract the low-molecular-weight compound,

wherein the ratio is a ratio of a mass of the intermediate polymer to a mass of the compressive fluid.

<3> The method for producing a polymer according to <1>, wherein the bringing is performed twice or more times.

<4> The method for producing a polymer according to any one of <1> to <3>, further containing:

bringing raw materials including the ring-opening polymerizable monomer into contact with the compressive fluid to carry out ring-opening polymerization of the ring-opening polymerizable monomer, to thereby obtain the intermediate polymer.

<5> The method for producing a polymer according to any one of <1> to <4>, wherein an amount of the low-molecular-weight compound in the intermediate polymer is 10,000 ppm by mass or less.

<6> The method according to any one of <1> to <5>, wherein the compressive fluid is supercritical carbon dioxide.

<7> The method for producing a polymer according to any one of <1> to <6>, wherein the compressive fluid has the density of 230 kg/m$^3$ to 900 kg/m$^3$.

<8> The method for producing a polymer according to any one of <1> to <7>, wherein the bringing is performed in the presence of an entrainer.

<9> The method for producing a polymer according to any one of <1> to <8>, wherein the low-molecular-weight compound is a ring-opening polymerizable monomer, or a catalyst, or the both thereof.

<10> The method for producing a polymer according to <9>, wherein the ring-opening polymerizable monomer is a monomer containing an ester bond, or a carbonate bond, or both thereof in a ring thereof.

<11> The method for producing a polymer according to <9>, wherein the catalyst is a metal catalyst, or an organic catalyst, or both thereof.

<12> A polymer product, containing:

ring-opening polymerizable monomer residues in an amount of less than 100 ppm by mass,

wherein the polymer product is a polymer product obtained by the method according to any one of <1> to <11>.

## Claims

1. A method for producing a polymer, comprising:

   bringing an intermediate polymer, which has been obtained through ring-opening polymerization of a ring-opening polymerizable monomer, into contact with, and melting the intermediate polymer in a compressive fluid having a density of 230 kg/m$^3$ or greater, at temperature lower than a melting point of the intermediate polymer, at a ratio of 0.05 to 10, to dissolve a low-molecular-weight compound contained in the intermediate polymer in the compressive fluid, to thereby extract the low-molecular-weight compound,

   wherein the ratio is a ratio of a mass of the intermediate polymer to a mass of the compressive fluid.

2. A method for producing a polymer, comprising:

   continuously bringing an intermediate polymer, which has been obtained through ring-opening polymerization of a ring-opening polymerizable monomer, into contact with, and melting the intermediate polymer in a compressive fluid having a density of 230 kg/m$^3$ or greater, at temperature lower than a melting point of the intermediate polymer, at a ratio of 0.05 to 10, to dissolve a low-molecular-weight compound contained in the intermediate polymer in the compressive fluid, to thereby extract the low-molecular-weight compound,

   wherein the ratio is a ratio of a mass of the intermediate polymer to a mass of the compressive fluid.

3. The method for producing a polymer according to claim 1, wherein the bringing is performed twice or more times.

4. The method for producing a polymer according to any one of claims 1 to 3, further comprising:

   bringing raw materials including the ring-opening polymerizable monomer into contact with the compressive fluid to carry out ring-opening polymerization of the ring-opening polymerizable monomer, to thereby obtain the intermediate polymer.

5. The method for producing a polymer according to any one of claims 1 to 4, wherein an amount of the low-molecular-weight compound in the intermediate polymer is 10,000 ppm by mass or less.

6. The method according to any one of claims 1 to 5, wherein the compressive fluid is supercritical carbon dioxide.

7. The method for producing a polymer according to any one of claims 1 to 6, wherein the compressive fluid has the density of 230 kg/m$^3$ to 900 kg/m$^3$.

8. The method for producing a polymer according to any one of claims 1 to 7, wherein the bringing is performed in the presence of an entrainer.

9. The method for producing a polymer according to any one of claims 1 to 8, wherein the low-molecular-weight compound is a ring-opening polymerizable monomer, or a catalyst, or the both thereof.

10. The method for producing a polymer according to claim 9, wherein the ring-opening polymerizable monomer is a monomer containing an ester bond, or a carbonate bond, or both thereof in a ring thereof.

11. The method for producing a polymer according to claim 9, wherein the catalyst is a metal catalyst, or an organic catalyst, or both thereof.

12. A polymer product, comprising:

ring-opening polymerizable monomer residues in an amount of less than 100 ppm by mass,
wherein the polymer product is a polymer product obtained by the method according to any one of claims 1 to 11.

# FIG. 1

# FIG. 2

# FIG. 3

# FIG. 4

FIG. 5

FIG. 6A

FIG. 6B

FIG. 7

**EUROPEAN SEARCH REPORT**

Application Number

EP 14 15 2556

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HILE D D ET AL: "RING-OPENING PRECIPITATION POLYMERIZATION OF POLY(D,L-LACTIDE-CO-GLYCOLIDE) IN SUPERCRITICAL CARBON DIOXIDE", MACROMOLECULAR: RAPID COMMUNICATIONS, WILEY VCH VERLAG, WEINHEIM, DE, vol. 20, no. 10, 1 October 1999 (1999-10-01), pages 511-514, XP000896643, ISSN: 1022-1336, DOI: 10.1002/(SICI)1521-3927(19991001)20:10<511 ::AID-MARC511>3.0.CO;2-Q * section "Extraction"; page 512 * | 1-12 | INV. C08G63/81 C08G63/90 C08G63/08 |
| X,P | WO 2013/121896 A1 (RICOH CO LTD [JP]; NEMOTO TAICHI [JP]; TANAKA CHIAKI [JP]) 22 August 2013 (2013-08-22) * examples 2, 9, 19 * | 12 | |
| X | US 2011/218313 A1 (MASE NOBUYUKI [JP] ET AL) 8 September 2011 (2011-09-08) | 12 | TECHNICAL FIELDS SEARCHED (IPC) |
| A | * example A1 * | 1-11 | C08G |

The present search report has been drawn up for all claims

| Place of search | Date of completion of the search | Examiner |
|---|---|---|
| The Hague | 7 April 2014 | Scheunemann, Sven |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 14 15 2556

This annex lists the patent family members relating to the patent documents cited in the above-mentioned European search report.
The members are as contained in the European Patent Office EDP file on
The European Patent Office is in no way liable for these particulars which are merely given for the purpose of information.

07-04-2014

| Patent document cited in search report | Publication date | Patent family member(s) | Publication date |
|---|---|---|---|
| WO 2013121896 A1 | 22-08-2013 | NONE | |
| US 2011218313 A1 | 08-09-2011 | CN 102190780 A<br>US 2011218313 A1 | 21-09-2011<br>08-09-2011 |

For more details about this annex : see Official Journal of the European Patent Office, No. 12/82

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8259676 A
- JP 2005132958 A
- JP 2006276573 A
- JP 47015526 B

- JP 47015527 B
- JP 47015528 B
- JP 47015533 B
- JP 47033166 A

**Non-patent literature cited in the description**

- **S. Y. et al.** *Green Chem.,* 2012, vol. 14 (5), 1357-1366
- The Latest Applied Technology of Supercritical Fluid. NTS Inc, 15 March 2004, 173

- Voluntary standard associated with food packaging formed of a synthetic resin, such as polyolefine. Hygienic test method. June 2004, 13